# EUROPEAN PATENT APPLICATION

(11) **EP 4 203 562 A1**
(43) Date of publication of application: **28.06.2023**
(21) Application number: 21865904.3
(22) Date of filing: 02.09.2021
(51) Int. Cl.: H04W 52/02, H04W 84/06

(54) **ELECTRONIC DEVICE, WIRELESS COMMUNICATION METHOD, AND COMPUTER-READABLE STORAGE MEDIUM**

(30) Priority: 09.09.2020 CN 202010941026
(71) Applicant: Sony Group Corporation, Minato-Ku, Tokyo, 108-0075 (JP)
(72) Inventor: LIU, Min, Beijing 100028 (CN); ZHOU, Mingtuo, Shanghai 200050 (CN)
(74) Representative: D Young & Co LLP
(86) International application number: PCT/CN2021/116082
(87) International publication number: WO 2022/052850

(57) **Abstract**

An electronic device, a wireless communication method, and a computer-readable storage medium. The electronic device comprises a processing circuit, configured to: determine parameters of a sleep mode of a user device according to information related to uplink data of the user device, parameters of the sleep mode comprising the duration of a sleep window, the duration of a data transmission window, and the start time of a first data transmission window; and send the parameters of the sleep mode to the user device, to enable the user device to alternate, according to the parameters of the sleep mode and in the time domain, between the data transmission window and the sleep window.

## Description

This application claims priority to Chinese Patent Application No. 202010941026.1, titled "ELECTRONIC DEVICE, WIRELESS COMMUNICATION METHOD, AND COMPUTER-READABLE STORAGE MEDIUM", filed on September 9, 2020 with the China National Intellectual Property Administration, which is incorporated herein by reference in its entirety.

### FIELD

The present disclosure relates to electronic equipment, a wireless communication method, and a computer-readable storage medium. More particularly, the present disclosure relates to electronic equipment in a core network of a wireless communication system, electronic equipment serving as user equipment in a wireless communication system, a wireless communication method performed by electronic equipment in a core network of a wireless communication system, a wireless communication method performed by user equipment in a wireless communication system, and a computer-readable storage medium.

### BACKGROUND

A non-terrestrial network (NTN) has a wide coverage. A single satellite can cover a huge area of the ground. Compared with a terrestrial network (TN), the NTN has a significant advantage of easy network deployment, and therefore can serve tens of thousands of user equipment (UEs).

Compared with TN, the NTN network has the following characteristics. On the one hand, due to movement of satellite equipment, the satellite equipment serving a UE is changing. On the other hand, due to periodicity of the motion of the satellite equipment around the earth, satellites in a same orbital plane form a coverage network, and a ground UE in the coverage network can correspond to a best access to satellite periodically.

For the NTN, it is considered that some of the UEs have less data transmission requirements, for example, generate data once a day or several days, and data amount in each transmission is small. In addition, the UEs can tolerate a long delay, such as several hours or days. For such UEs, a long-term connection may cause a waste of energy.

Therefore, it is necessary to propose a technical solution to enable a sleep mode of a UE in the NTN, so as to save energy of the UE in the NTN.

### SUMMARY

This section provides a general summary of the present disclosure, rather than a comprehensive disclosure of a full scope or all features of the present disclosure.

An objective of the present disclosure is to provide electronic equipment, a wireless communication method, and a computer-readable storage medium, which can save energy of a UE in an NTN.

According an aspect of the present disclosure, electronic equipment is provided, which includes processing circuitry configured to: determine parameters of a sleep mode of user equipment according to information related to uplink data of the user equipment, the parameters of the sleep mode including a time length of a sleep window, a time length of a data transmission window, and a start time of a first data transmission window; and transmit the parameters of the sleep mode to the user equipment so that the user equipment enters the data transmission window and the sleep window alternately in time domain according to the parameters of the sleep mode.

According to another aspect of the present disclosure, electronic equipment is provided, which includes processing circuitry configured to: receive parameters of a sleep mode of the electronic equipment from network side equipment, the parameters of the sleep mode including a time length of a sleep window, a time length of a data transmission window, and a start time of a first data transmission window; and enter the data transmission window and the sleep window alternately in time domain according to the parameters of the sleep mode.

According to another aspect of the present disclosure, a wireless communication method performed by electronic equipment is provided, including: determining parameters of a sleep mode of user equipment according to information related to uplink data of the user equipment, the parameters of the sleep mode including a time length of a sleep window, a time length of a data transmission window, and a start time of a first data transmission window; and transmitting the parameters of the sleep mode to the user equipment so that the user equipment enters the data transmission window and the sleep window alternately in time domain according to the parameters of the sleep mode.

According to another aspect of the present disclosure, a wireless communication method performed by electronic equipment is provided, including: receiving parameters of a sleep mode of the electronic equipment from network side equipment, the parameters of the sleep mode including a time length of a sleep window, a time length of a data transmission window, and a start time of a first data transmission window; and entering the data transmission window and the sleep window alternately in time domain according to the parameters of the sleep mode.

According to another aspect of the present disclosure, a computer-readable storage medium storing executable computer instructions is provided. The executable computer instructions, when executed by a computer, causes the computer to perform the wireless communication method according to any of the embodiments of the present disclosure.

With the electronic equipment, the wireless communication method, and the computer-readable storage medium, electronic equipment in a core network can determine parameters of a sleep mode of user equipment according to information related to uplink data of the user equipment, where the parameters of the sleep mode include a time length of a sleep window, a time length of a data transmission window, and a start time of a first data transmission window. Hence, the user equipment can enter the data transmission window and the sleep window alternately in time domain according to the parameters of the sleep mode. In this way, energy is saved.

Further areas of applicability will become apparent from the description provided herein. The description and specific examples in this summary are for purposes of illustration only and are not intended to limit the scope of the present disclosure.

### BRIEF DESCRIPTION OF THE DRAWINGS

The drawings are described herein for illustrating selected embodiments, rather than all possible embodiments, and are not intended to limit the scope of the present disclosure. In the drawings:
Figure 1(a) is a schematic diagram showing a scene where an NTN network includes transparent satellite equipment;
Figure 1(b) is a schematic diagram showing a scene where an NTN network includes non-transparent satellite equipment;
Figure 1(c) is a schematic diagram showing a scene where an NTN network includes transparent satellite equipment and non-transparent satellite equipment;
Figure 2 is a block diagram showing an example of a configuration of electronic equipment in a core network according to an embodiment of the present disclosure;
Figure 3 is a schematic diagram showing a sleep window and a data transmission window of a UE according to an embodiment of the present disclosure;
Figure 4 is a signaling flowchart showing a process of configuring parameters of a sleep mode in a case that a UE is not configured with unlicensed resources according to an embodiment of the present disclosure;
Figure 5 is a signaling flowchart showing a process of configuring parameters of a sleep mode in a case that a UE is configured with unlicensed resources according to an embodiment of the present disclosure;
Figure 6 is a schematic diagram showing a scene in which parameters of a sleep mode need to be adjusted according to an embodiment of the present disclosure;
Figure 7 is a signaling flowchart of adjusting parameters of a sleep mode according to an embodiment of the present disclosure;
Figure 8 is a schematic diagram showing a scene of changing satellite equipment serving a UE according to an embodiment of the present disclosure;
Figure 9 is a schematic diagram showing a scene of setting different data transmission windows for UEs in different ranges according to an embodiment of the present disclosure;
Figure 10 is a schematic diagram showing sleep windows and data transmission windows of UEs in range 1 as shown in Figure 9;
Figure 11 is a schematic diagram showing sleep windows and data transmission windows of UE4 to UE6 in range 2 as shown in Figure 9;
Figure 12 is a block diagram showing an example of a configuration of electronic equipment on a user equipment side according to an embodiment of the present disclosure;
Figure 13 is a signaling flowchart of a data transmission process in a case that a UE is not configured with unlicensed resources and does not use Non-Orthogonal Multiple Access (NOMA) according to an embodiment of the present disclosure;
Figure 14 is a signaling flowchart of a data transmission process in a case that a UE is not configured with unlicensed resources and uses NOMA according to an embodiment of the present disclosure;
Figure 15 is a signaling flowchart of a data transmission process in a case that a UE is configured with unlicensed resources and does not use NOMA according to an embodiment of the present disclosure;
Figure 16 is a schematic diagram showing a processing process of a UE in a case that the UE has data to transmit according to an embodiment of the present disclosure;
Figure 17 is a flowchart of a wireless communication method performed by electronic equipment in a core network according to an embodiment of the present disclosure;
Figure 18 is a flowchart of a wireless communication method performed by electronic equipment on a user equipment side according to an embodiment of the present disclosure;
Figure 19 is a block diagram showing an example of a server according to an embodiment of the present disclosure;
Figure 20 is a block diagram showing a first example of a schematic configuration of an Evolved Node B (eNB);
Figure 21 is a block diagram showing a second example of a schematic configuration of an eNB;
Figure 22 is a block diagram showing an example of a schematic configuration of a smart phone; and
Figure 23 is a block diagram showing an example of a schematic configuration of a car navigation device.

Although the present disclosure is susceptible to various modifications and alternatives, specific embodiments of the present disclosure are shown in the drawings by way of examples and are described in detail herein. However, it should be understood that description of the specific embodiments herein is not intended to limit the present disclosure to the specific forms disclosed, but to cover all modifications, equivalents and substitutions that fall within the spirit and scope of the present disclosure. It should be noted that same or similar reference numerals throughout the drawings indicate the same or like components.

### DETAILED DESCRIPTION

The embodiments of the present disclosure are described completely with reference to the drawings. The following description is merely exemplary, and is not intended to limit the present disclosure and application or use thereof.

Exemplary embodiments are provided so that the present disclosure is thorough and fully conveys the scope thereof to those skilled in the art. Numerous specific details, such as examples of specific components, devices, and methods, are set forth to provide a comprehensive understanding of the embodiments of the present disclosure. It is apparent for those skilled in the art that the exemplary embodiments may be implemented in many different forms without specific details, and should not be construed as limiting the scope of the present disclosure. In some exemplary embodiments, well-known processes, well-known structures, and well-known technologies are not described in detail.

The description are made in the following order:
1. Description of a scene;
2. Configuration example of electronic equipment in a core network;
3. Configuration example of user equipment;
4. Method embodiment;
5. Application examples.

### <1. Scene description>

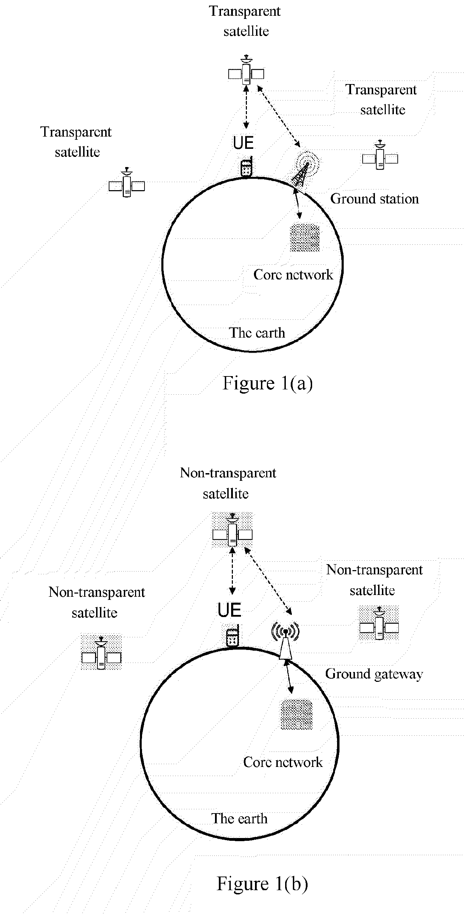

Figure 1(a) is a schematic diagram showing a scene where an NTN network includes transparent satellite equipment. As shown in Figure 1(a), a UE is served by transparent satellites. Each transparent satellite is connected to a core network through a ground station. The transparent satellite cannot process data, and the data needs to be processed by the ground station. The ground station may be base station equipment on the ground. That is, the ground station is a service base station for the UE. Uplink data from the UE is forwarded by the transparent satellite to the ground station, and downlink data from the ground station is forwarded by the transparent satellite to the UE.

Figure 1(b) is a schematic diagram showing a scene where an NTN network includes non-transparent satellite equipment. As shown in Figure 1(b), a UE is served by non-transparent satellites. The non-transparent satellite is connected to a core network through a ground gateway. The non-transparent satellite is capable of processing data. That is, a service base station for the UE is located on the non-transparent satellite. The UE transmits uplink data to the non-transparent satellite, and the non-transparent satellite transmits downlink data to the UE.

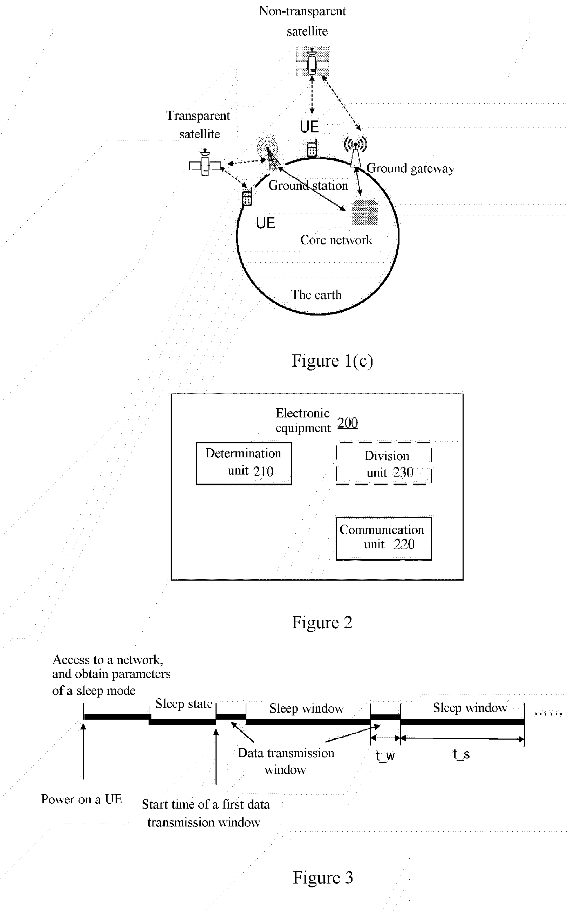

Figure 1(c) is a schematic diagram showing a scene where an NTN network includes transparent satellite equipment and non-transparent satellite equipment. As shown in Figure 1(c), a UE is served by a transparent satellite, and another UE is served by a non-transparent satellite. Due to mobility of the satellites, a UE may be served by a transparent satellite at a current time instant and by a non-transparent satellite at a next time instant.

As mentioned above, it is considered that some of the UEs have less data transmission requirements, for example, generate data once a day or several days, and data amount in each transmission is small. In addition, the UEs can tolerate a long delay, such as several hours or days. For such UEs, a long-term connection may cause a waste of energy.

For the above situation, the present disclosure proposes electronic equipment in a wireless communication system, a wireless communication method performed by electronic equipment in a wireless communication system, and a computer-readable storage medium, with which a sleep mode of a UE in an NTN is allowed, so that energy of the UE in the NTN is saved.

According to the present disclosure, the network side equipment may be base station equipment, which may be an eNB or gNB (a base station in the 5^{th}-generation communication system).

According to the present disclosure, the user equipment may be a mobile terminal (such as a smart phone, a tablet personal computer (PC), a notebook PC, a portable game terminal, a portable/dongle mobile router, and a digital camera device), or a in-vehicle terminal (such as a car navigation device). The user equipment may be implemented as a terminal (also referred to as a machine type communication (MTC) terminal) that performs machine-to-machine (M2M) communication. In addition, the user equipment may be a wireless communication module (such as an integrated circuit module including a single chip) installed on each of the above terminals.

According to the present disclosure, the wireless communication system may be a 5G NR (New Radio) communication system. In addition, the wireless communication system according to the present disclosure may include an NTN. In other words, user equipment in the wireless communication system may be served by satellite equipment. The satellite equipment may be transparent or non-transparent. In a case the satellite equipment is transparent, the transparent satellite equipment can communicate with a core network through ground base station equipment, and a service base station of the user equipment is the ground base station equipment. In a case that the satellite equipment is non-transparent, the non-transparent satellite equipment can communicate with the core network through ground gateway equipment, and the service base station of the user equipment is located on the satellite equipment.

### <2. Configuration example of electronic equipment in a core network>

Figure 2 is a block diagram showing an example of a configuration of electronic equipment 200 according to an embodiment of the present disclosure. The electronic equipment 200 here may be located in a core network.

As shown in Figure 2, the electronic equipment 200 may include a determination unit 210 and a communication unit 220.

Here, units of the electronic equipment 200 may be included in processing circuitry. It should be noted that the electronic equipment 200 may include a single processing circuit, or multiple processing circuits. Further, the processing circuitry may include various discrete functional units to perform various different functions and/or operations. It should be noted that these functional units may be physical entities or logical entities, and units with different names may be implemented by a same physical entity.

According to an embodiment of the present disclosure, the determination unit 210 may determine parameters of a sleep mode of user equipment according to information related to uplink data of the user equipment. The parameters of the sleep mode include a time length of a sleep window, a time length of a data transmission window, and a starting time of a first data transmission window.

According to an embodiment of the present disclosure, the electronic equipment 200 may transmit the parameters of the sleep mode to the user equipment through the communication unit 220, so that the user equipment can enter the data transmission window and the sleep window alternately in time domain according to the parameters of the sleep mode.

It can be seen that the electronic equipment 200 according to the embodiment of the present disclosure can determine the parameters of the sleep mode of the user equipment according to the information related to the uplink data of the user equipment. The parameters of the sleep mode include the time length of the sleep window, the time length of the data transmission window, and the start time of the first data transmission window. In this way, the user equipment can enter the data transmission window and the sleep window alternately in the time domain. Thereby, energy is saved.

Figure 3 is a schematic diagram showing a sleep window and a data transmission window of a UE according to an embodiment of the present disclosure. As shown in Figure 3, a time length of the sleep window is t_s, and a length of the data transmission window is t_w_{∘} Further, for parameters of each sleep mode, time lengths of sleep windows are equal to each other, and time lengths of data transmission windows are equal to each other. That is, on reception of the parameters of the sleep mode, the user equipment may enter a sleep state, and enter the first data transmission window according to the start time of the first data transmission window. Next, the user equipment can enter the data transmission window and the sleep window periodically according to the time length of the data transmission window and the time length of the sleep window. In addition, the electronic equipment 200 may adjust the time length of the sleep window and/or the data transmission window.

According to an embodiment of the present disclosure, the information related to the uplink data includes at least one of: a size of the uplink data, a period of the uplink data, and a maximum delay allowed by the uplink data.

According to an embodiment of the present disclosure, the electronic equipment 200 may receive, through the communication unit 220, the information related to the uplink data from satellite equipment that serves the user equipment. For example, in a case that the satellite equipment that serves the user equipment is transparent satellite equipment, the electronic equipment 200 may receive, through ground base station equipment, the information related to the uplink data forwarded by the transparent satellite equipment. In a case that the satellite equipment that serves the user equipment is non-transparent satellite equipment, the electronic equipment 200 may receive, through a ground gateway, the information related to the uplink data forwarded by the non-transparent satellite equipment.

In the present disclosure, after the UE established a physical connection and a high-level protocol connection with the core network, information of these connections may be stored by the core network. When a terminal transitions from the sleep state to a wake-up state, the terminal does not need to repeat a process of establishing the high-level protocol connection, which is also called a semi-permanent connection (SPC). In order to obtain the parameters of the sleep mode and establish such semi-permanent connection, the UE needs to transmit SPC request information to the core network. the SPC request information includes the information related to the uplink data.

According to an embodiment of the present disclosure, the determination unit 210 may determine the parameters of the sleep mode according to the size of the uplink data, the period of the uplink data, and/or the maximum delay allowed by the uplink data.

Here, the period of the uplink data indicates a period that the user equipment generates the uplink data. It is assumed that the user equipment generates the uplink data periodically. The size of the uplink data indicates a size of uplink data generated in each period. It is assumed that sizes of uplink data generated by the user equipment in individual periods are the same as each other. The maximum delay allowed by the uplink data indicates a delay of transmitting the uplink data that the user equipment can tolerate.

According to an embodiment of the present disclosure, the determination unit 210 may determine a sum of the time length of the sleep window and the time length of the data transmission window according to the period of the uplink data and ephemeris of individual satellites. Specifically, the determination unit 210 may enable to enter the data transmission window when there is satellite equipment closing to a position right over the user equipment to the greatest extent (that is, when a best access condition is satisfied). For example, assuming that the user equipment generates the uplink data every T hours and there is satellite equipment moves to a position right over the user equipment every S hours, then the determination unit 210 may determine the sum of the time length of the sleep window and the time length of the data transmission window as a value which is a multiple of S, and is greater than and closest to T. A specific example thereof is described below.

It is assumed there are 10 satellites on a same satellite orbital plane constituting a satellite mobile network, and the period of each of the satellites moving around the earth is 7 hours. That is to say, for a single UE, the best access condition is satisfied every 0.7 hours, that is, there is one satellite directly over the UE every 0.7 hours. It is further assumed that the UE generates data every 24 hours. Hence, according to an embodiment of the present disclosure, the determination unit 210 may determine 24.5 (which is a multiple of 0.7) as the sum of the time length of the sleep window and the time length of the data transmission window.

According to an embodiment of the present disclosure, the determination unit 210 may determine the time length of the data transmission window according to a size of the uplink data. Specifically, the determination unit 210 may determine a time period for transmitting the uplink data according to the size of the uplink data, and thereby determine the size of the data transmission window reasonably.

According to an embodiment of the present disclosure, the determination unit 210 may determine a start time of the first data transmission window according to a time instant for a next data generation and the ephemeris of individual satellites. That is, the start time of the first data transmission window is determined to be a time instant when a best access satellite is available after the next data generation. For example, in a case that a UE generates next data 2 hours later and a satellite is right over the UE 2.1 hours later, the determination unit 210 may determine that the start time of the first data transmission window is a time instant immediately after 2.1 hours.

According to an embodiment of the present disclosure, the determination unit 210 may determine the start time of the first data transmission window, where the start time is an absolute time in time domain. In the sleep mode of the TN network, it is determined on the network side only a sleep duration of the user equipment, rather than an absolute time when the user equipment wakes up. According to an embodiment of the present disclosure, the determination unit 210 may determine the start time of the first data transmission window according to the information related to the uplink data and the ephemeris information, so that the user equipment can enter the data transmission window at a time instant as close as possible to a time instant when the satellite equipment with the best access condition exists. Thereby, energy of the user equipment is saved and reliability of data transmission is improved.

As described above, the determination unit 210 determines the time length of the sleep window, the time length of the data transmission window, and the start time of the first data transmission window according to the size of the uplink data and the period of the uplink data. On reception of the parameters, the user equipment may enter the sleep state, then enter the first data transmission window according to the start time of the first data transmission window, and then enter the data transmission window and sleep window periodically according to the time length of the data transmission window and the time length of the sleep window.

According to an embodiment of the present disclosure, the SPC request information may further include location information of the user equipment and radio frequency (RF) characteristics of the user equipment. Further, the parameters of the sleep mode determined by the determination unit 210 may further include information on a best serving satellite device corresponding to each data transmission window.

Here, the RF characteristics of the user equipment may include an RF parameter such as a frequency band and a beam direction of the user equipment. In addition, the radio frequency characteristics of the user equipment may further include radio frequency parameters such as a beam forming ability and/or polarization ability of an antenna. The determination unit 210 may determine best serving satellite equipment for the user equipment at each time instant corresponding to a data transmission window according to the ephemeris information of individual satellites, the location information of the user equipment, and the radio frequency characteristics. The information on the best serving satellite equipment may include an identification and radio frequency characteristics of the satellite equipment. The radio frequency characteristics of the satellite equipment may include a radio frequency parameter such as a frequency band and a beam direction of the satellite equipment. In addition, the radio frequency characteristics of the satellite equipment may further include a radio frequency parameter such as frequency compensation information of a beam and/or a timing advance in time domain.

According to an embodiment of the present disclosure, the parameters of the sleep mode determined by the determination unit 210 may further include the ephemeris information of individual satellites that the UE may access at any time, that is, the ephemeris information of candidate satellites that may serve the UE.

As described above, the SPC request information transmitted from the UE may include the information related to the uplink data. Alternatively, the SPC request information may further include the location information of the UE and/or the RF characteristics of the UE. In addition, the parameters of the sleep mode may include the time length of the sleep window, the time length of the data transmission window, and the start time of the first data transmission window. Alternatively, the parameters of the sleep mode may further include information of best access satellites corresponding to individual data transmission windows and/or ephemeris information of the candidate satellites. Alternatively, the parameters of the sleep mode may further include information of a best access satellite corresponding to a next data transmission window.

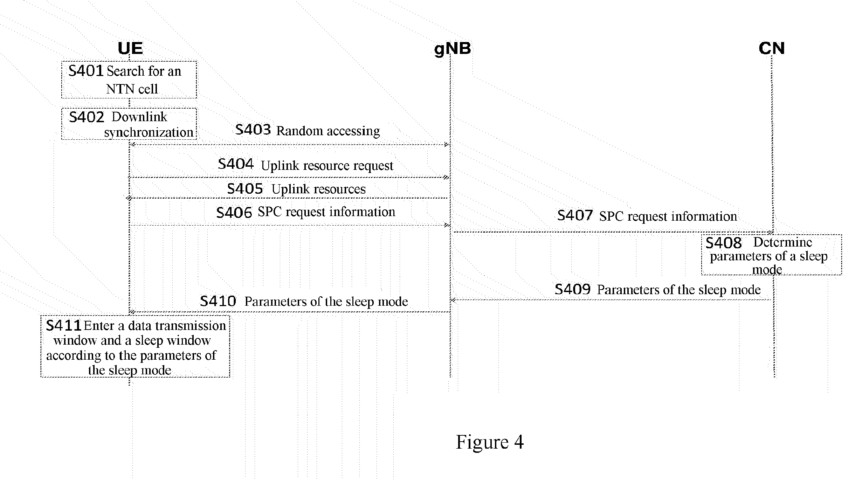

Figure 4 is a signaling flowchart showing a process of configuring parameters of a sleep mode in a case that a UE is not configured with unlicensed resources according to an embodiment of the present disclosure. In Figure 4, a core network (CN) may be implemented through the electronic equipment 200. Reference is made to Figure 4. In step S401, a UE is powered on and searches for an NTN cell. In step S402, the UE performs downlink synchronization. Next, in step S403, the UE randomly accesses a gNB. Here, the gNB may be located on the ground or satellite equipment. In step S404, the UE transmits an uplink resource request to the gNB to request uplink resources for transmitting a SPC request. In step S405, the gNB allocates the uplink resources for transmitting the SPC request to the UE. In step S406, the UE transmits the SPC request information using the allocated uplink resources. In step S407, the gNB forwards the SPC request information to the CN. In step S408, the CN determines parameters of a sleep mode of the UE. In step S409, the CN transmits the parameters of the sleep mode to the gNB. In step S410, the gNB transmits the parameters of the sleep mode to the UE. In step S411, the UE enters a data transmission window and a sleep window alternately in time domain according to the parameters of the sleep mode.

An NOMA (Non-Orthogonal Multiple Access) technology is proposed in recent years for saving system communication bandwidth and energy consumption. According to the NOMA technology, multiple UEs may transmit uplink data using a same time-frequency resource, and a receiver may demodulate data from the multiple UEs through a certain algorithm.

Reference is made to Figure 2. The electronic equipment 200 may further include a division unit 230, which is configured to divide user equipment into NOMA groups. User equipment in a same NOMA group may use a same time-frequency resource.

According to an embodiment of the present disclosure, the division unit 230 may determine NOMA groups according to information related to uplink data of multiple user equipment. The division unit 230 may determine the NOMA groups through any method known in the art, and is not limited herein. For example, the division unit 230 may divide user equipment which are close to each other, have similar periods of uplink data and similar sizes of uplink data into a same NOMA group.

According to an embodiment of the present disclosure, the determination unit 210 may determine identical parameters of the sleep mode for multiple user equipment in one NOMA group. That is, for the multiple user equipment in a same NOMA group, time lengths of sleep windows, time lengths of data transmission windows, and start time of first data transmission windows are identical to each other. In this way, the multiple user equipment in the NOMA group can wake up at a same time instant and transmit uplink data using the same time-frequency resource.

According to an embodiment of the present disclosure, a UE may be allocated with time-frequency resources which are unlicensed. For example, the network side equipment may allocate unlicensed time-frequency resources for the UE through RRC configuration information. Hence, the UE can transmit uplink data using the unlicensed time-frequency resources directly, without applying for the resources in advance. Thereby, signaling transmission can be reduced and UE energy consumption can be saved. In the NTN, UE is far away from the satellite equipment, which consumes a lot of time and energy to apply for uplink resources. Therefore, the technology in the present disclosure is particularly applicable to the NTN.

According to an embodiment of the present disclosure, the network side equipment may allocate unlicensed resources to the user equipment, so that the user equipment may transmit the SPC request information using the unlicensed resources.

According to the embodiment of the present disclosure, the SPC request information transmitted from the user equipment may further include information on whether the user equipment supports NOMA. That is, the user equipment is divided into a NOMA group by the network side equipment only when the user equipment supports NOMA.

According to an embodiment of the present disclosure, after the user equipment receives the parameters of the sleep mode and enters the sleep mode, the network side equipment may release the unlicensed resources for the user equipment, so that the unlicensed resources may be used by other user equipment. After the user equipment wakes up, the network side equipment may tack back the unlicensed resources for the user equipment from the other user equipment. In this way, it may be avoided that the user equipment occupies the unlicensed resources after entering the sleep mode. In the present disclosure, releasing the unlicensed resources is different from deactivating the unlicensed resources. The deactivating the authorization free resource means that the unlicensed resources are deactivated and no longer belong to the user equipment. The releasing the unlicensed resources means that the unlicensed resources are temporarily released for use by other user equipment when the user equipment is in the sleep mode, where the unlicensed resources still belong to the user equipment. As described above, it may be understood as that multiple user equipment share a same block of unlicensed resources in an alternate manner in the time domain.

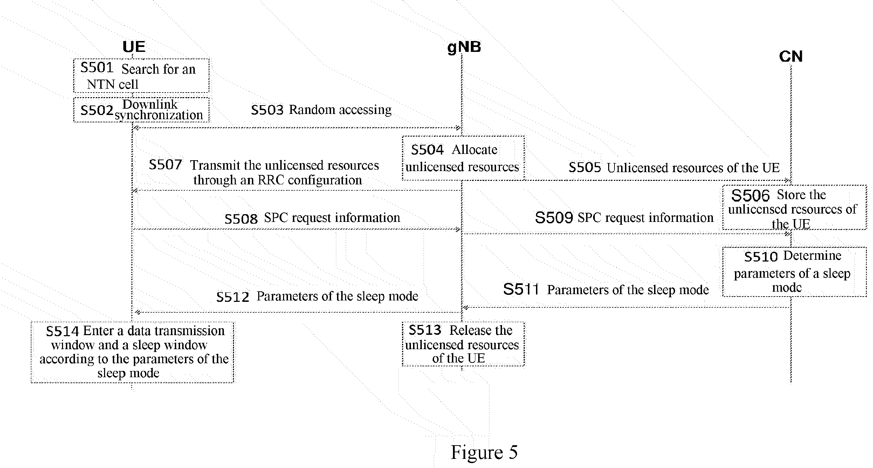

Figure 5 is a signaling flowchart showing a process of configuring parameters of a sleep mode in a case that a UE is configured with unlicensed resources according to an embodiment of the present disclosure. In Figure 5, a CN may be implemented by the electronic equipment 200. Reference is made to Figure 5. In step S501, a UE searches for an NTN cell. In step S502, the UE performs downlink synchronization. Next, in step S503, the UE randomly accesses a gNB. Here, the gNB may be located on the ground or satellite equipment. In step S504, the gNB allocates unlicensed resources to the UE. In step S505, the gNB transmits the unlicensed resources of the UE to the CN. In step S506, the CN stores the unlicensed resources of the UE. Here, the CN may store all the unlicensed resources of the UE. In step S507, the gNB transmits the unlicensed resources of the UE to the UE through an RRC configuration. In step S508, the UE transmits SPC request information to the gNB through the configured unlicensed resources. In step S509, the gNB forwards the SPC request information to the CN. In step S510, the CN determines parameters of a sleep mode of the UE. In step S511, the CN transmits the parameters of the sleep mode to the gNB. In step S512, the gNB transmits the parameters of the sleep mode to the UE. In step S514, the UE enters a data transmission window and a sleep window alternately in time domain according to the parameters of the sleep mode. In addition, in step S513, gNB may release the unlicensed resources of the UE.

Although communication between the UE and the gNB are shown in Figure 4 and Figure 5, it should be understood that the UE may communicate with the gNB directly in a case that the gNB is located on satellite equipment, and may communicate with the gNB through satellite equipment in a case that the gNB is located in a ground base station. Similarly, although communication between the CN and the gNB are shown in Figure 4 and Figure 5, it should be understood that the gNB may communicate with the CN through a ground gateway in a case that the gNB is located on satellite equipment.

As described above, according to an embodiment of the present disclosure, the determination unit 210 may determine the parameters of the sleep mode of the user equipment. In addition, the determination unit 210 may update the parameters of the sleep mode of the user equipment. That is, the determination unit 210 may re-determine (also referred to as adjust herein) the parameters of the sleep mode of the user equipment, in response to a change of one or more of the parameters of the sleep mode (the time length of the sleep window, the time length of the data transmission window, the start time of the first data transmission window) due to a change of one or more items of the information related to the uplink data (the period of the uplink data, the size of the uplink data, the maximum delay allowed by the uplink data) of the user equipment. In addition, the determination unit 210 may re-determine (also referred to as adjust herein) the parameters of the sleep mode of the user equipment, in response to a change of the parameters of the sleep mode (the information on best access satellite equipment corresponding to each data transmission window) due to a change of one or more of the ephemeris of the satellite equipment, the radio frequency characteristics of the user equipment, and the location of the user equipment.

In addition, according to the embodiment of the present disclosure, the determination unit 210 may adjust the parameters of the sleep mode of the user equipment even if none of the information related to the uplink data of the user equipment, the location of the user equipment, the radio frequency characteristics of the user equipment, or the ephemeris of the satellite equipment is changed. For example, the determination unit 210 may adjust the parameters of the sleep mode according to the maximum delay allowed by the uplink data of the user equipment. Here, since there may be a time difference between a time instant when the user equipment generates the uplink data and the data transmission window, the determination unit 210 may determine to adjust the parameters of the sleep mode in a case that the time difference is greater than the maximum delay allowed by the uplink data.

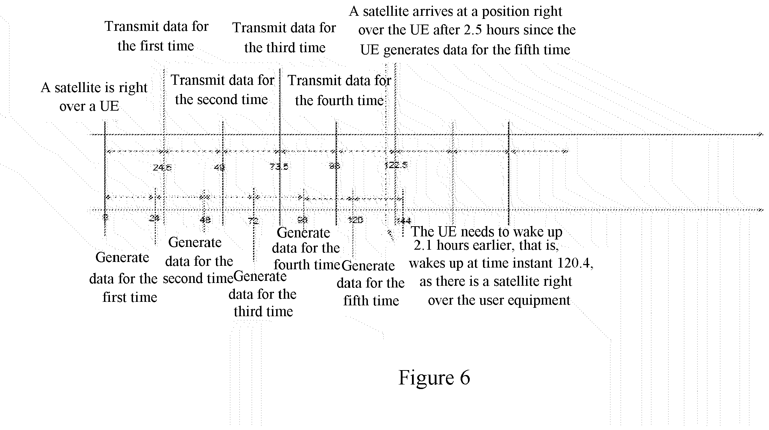

Figure 6 is a schematic diagram showing a scene in which parameters of a sleep mode need to be adjusted according to an embodiment of the present disclosure. In Figure 6, for the convenience of illustration, it is assumed that a UE generates data at time instant 0 and a satellite is right over the UE at time instant 0. A horizontal axis represents time in unit of hours. Here, it is assumed that the UE generates data every 24 hours. That is, the UE generates data for the first time at time instant 24, and the UE generates data for the second time at time instant 48, and the UE generates data for the third time at time instant 72, and the UE generates data for the fourth time at time instant 96, and the UE generates data for the fifth time at time instant 120, and the like. Furthermore, it is assumed that there is a satellite having a best access condition every 0.7 hours, that is, there is a satellite located right over the UE every 0.7 hours. Therefore, the determination unit determines the sum of the time length of the sleep window and the time length of the data transmission window to be 24.5, through the above-mentioned manner. That is, the start time of the first data transmission window is 24.5, a start time of a second data transmission window is 49, a start time of a third data transmission window is 73.5, a start time of a fourth data transmission window is 98, and a start time of a fifth data transmission window is 122.5. Here, it is assumed that the maximum delay of the uplink data is 2. Hence, the user equipment generates data for the first time at time instant 24, and transmits the data in the first data transmission window with a delay of 0.5. The user equipment generates data for the second time at time instant 48, and transmits the data in the second data transmission window with a delay of 1. The user equipment generates data for the third time at time instant 72, and transmits the data in the third data transmission window with a delay of 1.5. The user equipment generates data for the fourth time at time instant 96, and transmits data in the fourth data transmission window with a delay of 2. The user equipment generates data for the fifth time at time instant 120. However, the start time of the fifth data transmission window is 122.5, and a delay is 2.5, which exceeds the maximum delay of the uplink data.

According to an embodiment of the present disclosure, in a situation as shown in Figure 6, the determination unit 210 may adjust the parameters of the sleep mode of the user equipment. For example, the determination unit 210 reduces the time length of the fourth sleep window by 2.1 hours, so that the user equipment wakes up 2.1 hours earlier. This is because that there is a satellite right over the user equipment at time instant 120.4. That is, the determination unit 210 may adjust the parameters of the sleep mode of the user equipment, so as to satisfy the maximum delay of the uplink data of the user equipment.

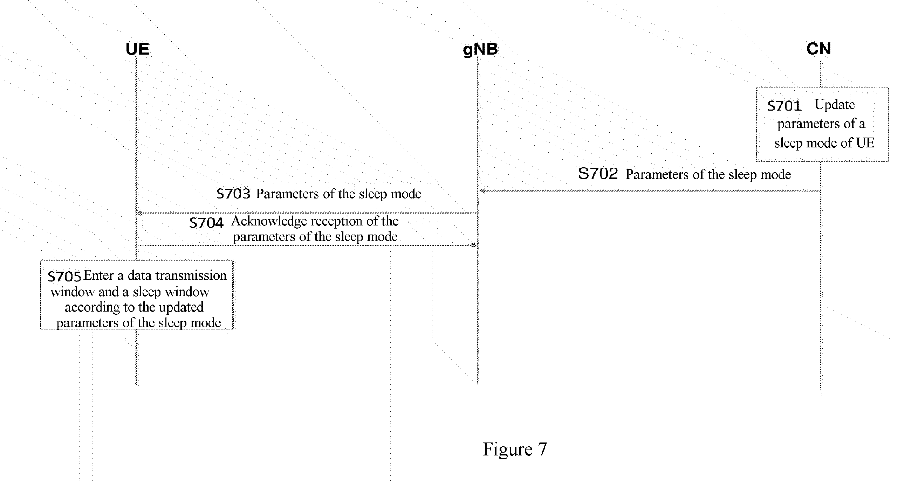

Figure 7 is a signaling flowchart of adjusting parameters of a sleep mode according to an embodiment of the present disclosure. In Figure 7, a CN may be implemented by the electronic equipment 200. Reference is made to Figure 7. In step S701, the CN updates parameters of a sleep mode of a UE. In step S702, the CN transmits the parameters of the sleep mode of the UE to a gNB. In step S703, the gNB transmits the updated parameters of the sleep mode to the UE. In step S704, the UE transmits feedback information acknowledging reception of the parameters of the sleep mode. In step S705, the UE enters a data transmission window and a sleep window alternately in time domain according to the parameters of the sleep mode.

An example in which the determination unit 210 updates the parameters of the sleep mode of the user equipment is described above. Here, the determination unit 210 updates the parameters of the sleep mode only when the user equipment is awake.

As described above, the parameters of the sleep mode is determined and updated by the electronic equipment 200 in the core network. Since the satellite equipment serving the user equipment changes over time, the electronic equipment 200 may transmit the parameters of the sleep mode of the user equipment to non-transparent satellite equipment that will serve the user equipment, or ground base station equipment connected with transparent satellite equipment that will serve the user equipment. That is, when the satellite equipment serving the user equipment is about to change, the electronic equipment 200 may transmit, through the communication unit 220, the parameters of the sleep mode of the user equipment to the transparent satellite equipment that will serve the user equipment or the ground base station equipment connected with the transparent satellite equipment that will serve the user equipment. In this way, the satellite equipment that will serve the user equipment may be prepared for access of the user equipment in advance. For example, the user equipment may adjust a frequency band, a beam direction, and other radio frequency characteristics.

According to an embodiment of the present disclosure, in a case that the satellite equipment that will serve user equipment is non-transparent satellite equipment, the electronic equipment 200 may transmit the parameters of the sleep mode of the user equipment to the non-transparent satellite equipment through the ground gateway, so that the non-transparent satellite equipment adjusts the radio frequency characteristics. In a case that the satellite equipment that will serve the user equipment is transparent satellite equipment, the electronic equipment 200 may transmit the parameters of the sleep mode of the user equipment to the ground base station, so that the ground base station adjusts the radio frequency characteristics of the transparent satellite equipment.

According to an embodiment of the present disclosure, the electronic equipment 200 may set instruction information in the parameters of the sleep mode, where the instruction information is for indicating whether the parameters of the sleep mode are to be forwarded to the user equipment or to be transmitted to the satellite equipment. For example, in a case that the indication information in the parameters of the sleep mode is 0, the parameters of the sleep mode are to be transmitted to the satellite equipment, in order to be prepared in advance for access of the user equipment. In a case that the indication information in the parameters of the sleep mode is 1, the parameters of the sleep mode are to be forwarded to the user equipment for the user equipment configuring or updating the sleep mode.

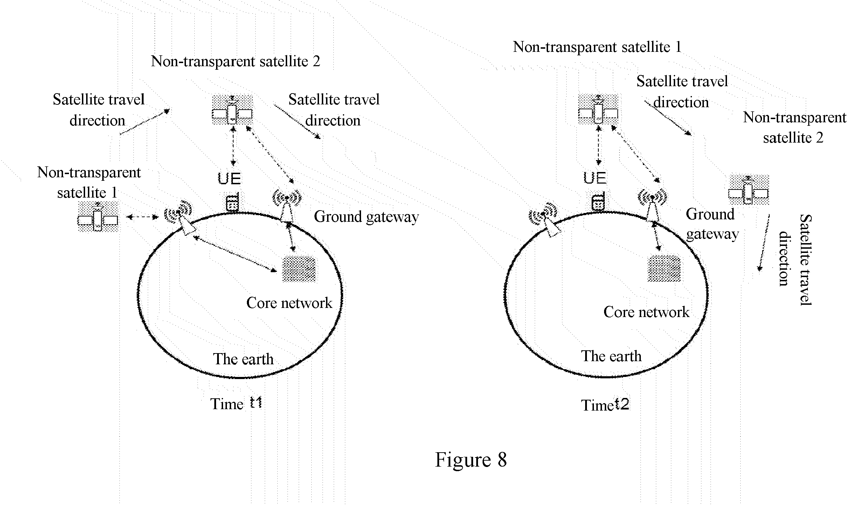

Figure 8 is a schematic diagram showing a scene of changing satellite equipment serving a UE according to an embodiment of the present disclosure. As shown in Figure 8, both non-transparent satellite equipment 1 and non-transparent satellite equipment 2 are connected to a core network through a ground gateway. At time 11, the UE is served by the non-transparent satellite equipment 2. The non-transparent satellite equipment 1 and the non-transparent satellite equipment 2 move in directions indicated by arrows drawn in the figure, respectively. At time t2, the UE is served by the non-transparent satellite equipment 1. According to an embodiment of the present disclosure, the electronic equipment 200 in the core network may transmit parameters of a sleep mode of the UE to the non-transparent satellite equipment 1 at an appropriate time before the UE is served by the non-transparent satellite device 1.

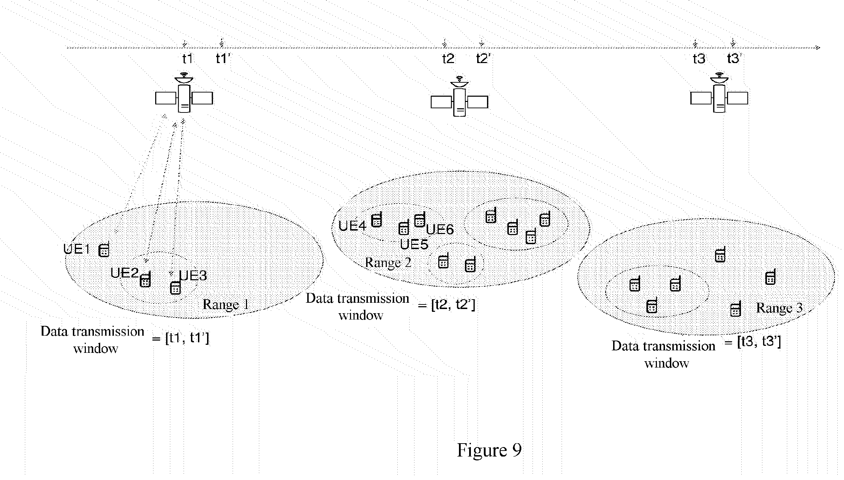

A specific example of an embodiment according to the present disclosure is described below with reference to Figure 9 to Figure 11.

Figure 9 is a schematic diagram showing a scene of setting different data transmission windows for UEs in different ranges according to an embodiment of the present disclosure. As shown in Figure 9, satellite equipment travels over three regions in a period of time, and each of the regions has some UEs. The three regions are identified as range 1, range 2, and range 3. When determining parameters of a sleep mode for the UEs in each of the three regions, the electronic equipment 200 in the core network may set data transmission windows as [t1,t1'], [t2,t2'], and [t3,t3'], which correspond to time periods when the satellite equipment is located over the three regions and is a best access satellite for a UE in the three regions, respectively. In range 1, UE1 does not support NOMA, UE2 and UE3 support NOMA, and the core network groups UE2 and UE3 into a same NOMA group. In range 2, UE4, UE5 and UE6 all support NOMA, and the core network groups UE4, UE5 and UE6 into a same NOMA group.

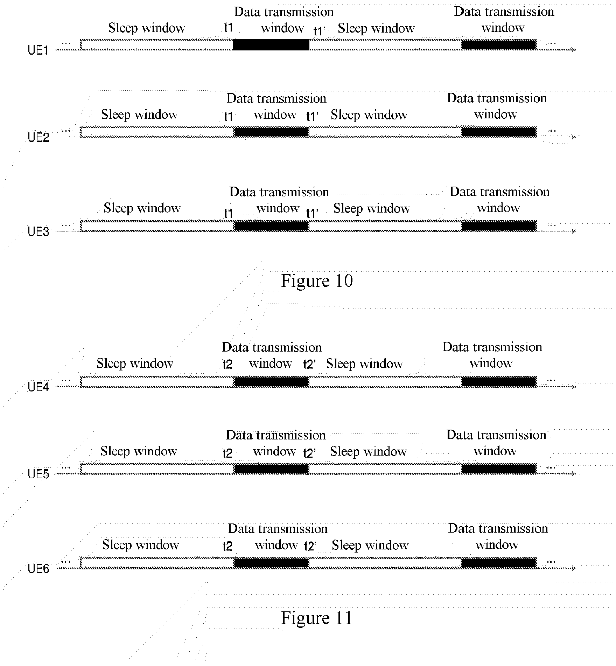

Figure 10 is a schematic diagram showing sleep windows and data transmission windows of UEs in range 1 as shown in Figure 9. In Figure 10, data transmission windows of UE1, UE2 and UE3 are all [t1,t1']. UE1 transmit uplink data using resources that are allocated individually, while UE2 and UE3 transmit uplink data using same resources.

Figure 11 is a schematic diagram showing sleep windows and data transmission windows of UE4 to UE6 in range 2 as shown in Figure 9. In Figure 11, data transmission windows of UE4, UE5 and UE6 are all [t2,t2']. UE4, UE5 and UE6 transmit uplink data using same resources.

Although an example in which the parameters of the sleep mode include the start time of the first data transmission window is described, the electronic equipment 200 may indicate the start time of the first data transmission window implicitly. For example, the electronic equipment 200 make an agreement with the user equipment that the user equipment enters the sleep window after a predetermined time period since reception of an RRC release signaling, and enters the first data transmission window after the sleep window ends. That is, a time instant after the predetermined time period since reception of the RRC release signaling is the start time of the first sleep window, and a time instant after the sleep window ends is the start time of the first data transmission window. In this way, the parameters of the sleep mode may include merely the time length of the sleep window and the time length of the data transmission window. Here, a time length of the predetermined time period (for example, expressed by Timer#1) may be included in the RRC release signaling transmitted by the electronic equipment 200 to the user equipment. Alternatively, the electronic equipment 200 and the user equipment may make an agreement in advance on the time length of the predetermined time period.

As described above, according to the embodiments of the present disclosure, the electronic equipment 200 may determine the parameters of the sleep mode for the user equipment, so that the user equipment can enter the data transmission window and the sleep window alternately in the time domain. Thereby, energy is saved. Further, the electronic equipment 200 may determine the parameters of the sleep mode according to the information related to the uplink data and the ephemeris of the satellites, so that the user equipment can transmits the uplink data at the time instant as close as possible to a time instant when the best access condition is satisfied. In addition, the electronic equipment 200 may adjust the parameters of the sleep mode according to the maximum delay of the uplink data, so as to ensure a requirement on delay. Further, the electronic equipment 200 may transmit the parameters of the sleep mode in advance to the base station equipment that will serve the user equipment, so that the satellite equipment can be prepared in advance. In summary, the electronic equipment 200 according to the embodiments of the present disclosure enables the user equipment in the NTN to use the sleep mode, so that the energy consumption of the user equipment in the NTN is reduced.

### <3. Configuration example of user equipment>

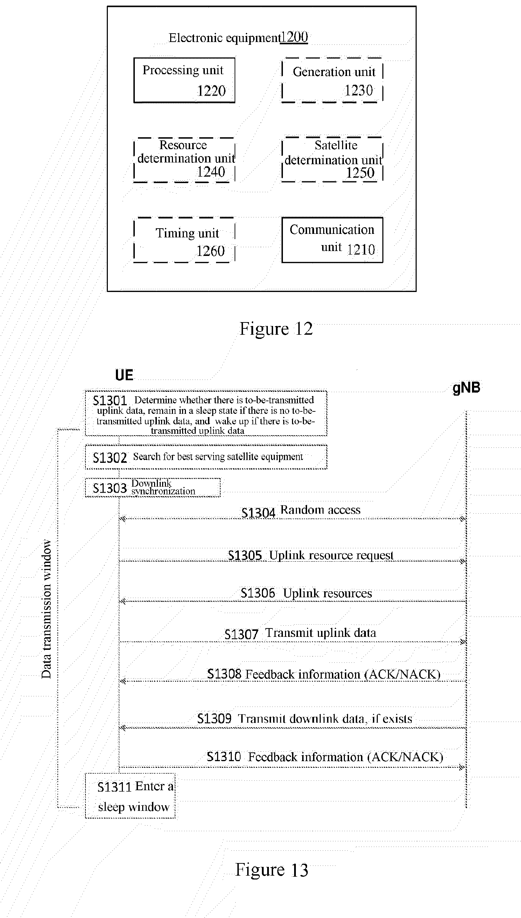

Figure 12 is a block diagram showing a structure of electronic equipment 1200 serving as user equipment in a wireless communication system according to an embodiment of the present disclosure.

As shown in Figure 12, the electronic equipment 1200 may include a communication unit 1210 and a processing unit 1220.

Here, units of the electronic equipment 1200 may be included in processing circuitry. It should be noted that the electronic equipment 1200 may include a single processing circuit or may include multiple processing circuits. Further, the processing circuitry may include various discrete functional units to perform various different functions and/or operations. It should be noted that these functional units may be physical entities or logical entities, and units with different names may be implemented by a same physical entity.

According to an embodiment of the present disclosure, the electronic equipment 1200 may receive parameters of a sleep mode of the electronic device 1200 from network side equipment through the communication unit 1210. The parameters of the sleep mode include a time length of a sleep window, a time length of a data transmission window, and a start time of a first data transmission window.

According to an embodiment of the present disclosure, the processing unit 1220 may control the electronic equipment 1200 to enter the data transmission window and the sleep window alternately in time domain according to the parameters of the sleep mode.

According to an embodiment of the present disclosure, the network side equipment may be base station equipment. The base station equipment may be located on satellite equipment or on the ground, that is, the network side equipment may be base station equipment that serves the electronic equipment 1200. That is, the network side equipment is non-transparent satellite equipment that serves the electronic equipment 1200, or ground base station equipment connected with transparent satellite equipment that serves the electronic equipment 1200.

According to an embodiment of the present disclosure, the electronic equipment 1200 may enter the sleep mode on reception of the parameters of the sleep mode, and then enter the first data transmission window at the start time of the first data transmission window, and then enter the data transmission window and the sleep window alternately according to the time length of the data transmission window and the time length of the sleep window.

According to an embodiment of the present disclosure, as shown in Figure 12, the electronic equipment 1200 may further include a generation unit 1230. The generation unit is configured to generate SPC request information including information related to the uplink data of the electronic equipment 1200. Further, the electronic equipment 1200 may transmit the SPC request information to the network side equipment through the communication unit 1210, so that the network side equipment forwards the SPC request information to a core network. Hence, the core network can determine the parameters of the sleep mode of the electronic equipment 1200.

According to an embodiment of the present disclosure, the information related to the uplink data includes at least one of: a size of the uplink data, a period of the uplink data, and a maximum delay allowed by the uplink data.

According to an embodiment of the present disclosure, the SPC request information may further include location information of the electronic equipment 1200 and radio frequency characteristics of the electronic equipment 1200. In addition, the parameters of the sleep mode received by the electronic equipment 1200 may further include information on best serving satellite equipment corresponding to each data transmission window.

According to an embodiment of the present disclosure, the SPC request information may further include information about whether NOMA is supported.

According to an embodiment of the present disclosure, as shown in Figure 12, the electronic device 1200 further includes a resource determination unit 1240. The resource determination unit is configured to determine resources for transmitting uplink information. Specifically, in a case that the electronic equipment 1200 is not configured with unlicensed resources, the resource determination unit 1240 may determine that the resources for transmitting the uplink information are licensed resources allocated by the network side equipment in response to a request. In a case that the electronic equipment 1200 is configured with unlicensed resources, the resource determination unit 1240 may determine that the resources for transmitting the uplink information are unlicensed resources allocated by the network side equipment.

According to an embodiment of the present disclosure, in a case that the electronic equipment 1200 is not configured with unlicensed resources, the electronic equipment 1200 may transmit an uplink resource request to the network side equipment through the communication unit 1210, and receive uplink resources allocated by the network side equipment from the network side equipment through the communication unit 1210. Further, the electronic equipment 1200 may transmit the SPC request information using the uplink resources allocated by the network side equipment.

According to an embodiment of the present disclosure, in a case that the electronic equipment 1200 is configured with unlicensed resources, the electronic equipment 1200 may receive, from the network side equipment through the communication unit 1210, the unlicensed resources allocated by the network side equipment for the electronic device 1200. Further, the electronic equipment 1200 may transmit the SPC request information using the unlicensed resources allocated by network side equipment.

Embodiments of a process of the electronic equipment 1200 establishing the SPC are described in detail in the previous description, and are not repeated here. A process of data transmission of the electronic equipment 1200 is described in detail below.

According to an embodiment of the present disclosure, the electronic equipment 1200 determines, for each data transmission window, whether there is to-be-transmitted uplink data in the data transmission window. The electronic equipment 1200 remains in a sleep state in a case that there is no to-be-transmitted uplink data. Further, as shown in Figure 12, the electronic equipment 1200 may further include a satellite determination unit 1250, which is configured to determine best serving satellite equipment. In a case that there is to-be-transmitted uplink data in the data transmission window, the satellite determination unit 1250 may determine best serving satellite device corresponding to the data transmission window according to the parameters of the sleep mode, so that the electronic equipment 1200 may access the best serving satellite device.

As described above, according to an embodiment of the present disclosure, the electronic equipment 1200 is in the sleep state during the sleep window. During the data transmission window, the electronic equipment 1200 may be in the sleep state or a data transmission state (wake-up state), depending on whether there is to-be-transmitted uplink data.

In a case the electronic equipment 1200 is not configured with unlicensed resources, the electronic equipment 1200 may transmit an uplink resource request to the network side equipment through the communication unit 1210, and receive uplink resources allocated by the network side equipment from the network side equipment through the communication unit 1210. Further, the electronic equipment 1200 may transmit the uplink data using the uplink resources allocated by the network side equipment.

Figure 13 is a signaling flowchart of a data transmission process in a case that a UE is not configured with unlicensed resources and does not use NOMA according to an embodiment of the present disclosure. In Figure 13, the UE may be implemented by the electronic equipment 1200. In step S1301, the UE determines whether there is to-be-transmitted uplink data on arrival of a data transmission window. The UE remains in a sleep state in a case that there is no to-be-transmitted uplink data; and the UE wakes up in a case that there is to-be-transmitted uplink data. In step S1302, the UE determines best serving satellite equipment corresponding to the data transmission window according to parameters of the sleep mode, and searches for the best serving satellite equipment. In step S1303, the UE performs downlink synchronization. In step S1304, the UE randomly accesses a gNB. In step S1305, the UE transmits an uplink resource request to the gNB to request resources for transmitting uplink data. In step S1306, the gNB transmits uplink resources to the UE. In step S1307, the UE transmits the uplink data using the uplink resources transmitted from the gNB. In step S1308, the gNB transmits feedback information for the uplink data, where the feedback information includes ACK/NACK. In step S1309, the gNB transmits downlink data, if exists, to the UE. In step S 1310, the UE transmits feedback information for the downlink data, where the feedback information includes ACK/NACK. In step S1311, the data transmission window ends and the UE enters the sleep window.

In a case that the electronic equipment 1200 supports NOMA and is in a NOMA group with other user equipment, the electronic equipment 1200 may transmit an uplink resource request to the network side equipment through the communication unit 1210, and receive, through the communication unit 1210, NOMA group information transmitted by the network side equipment. Here, the NOMA group information may include identification of all user equipment included in various NOMA groups and the uplink resources allocated to user equipment in each of the NOMA groups. Further, the electronic equipment 1200 may transmit uplink data using the uplink resources allocated by the network side equipment for the NOMA group where the electronic device 1200 belongs.

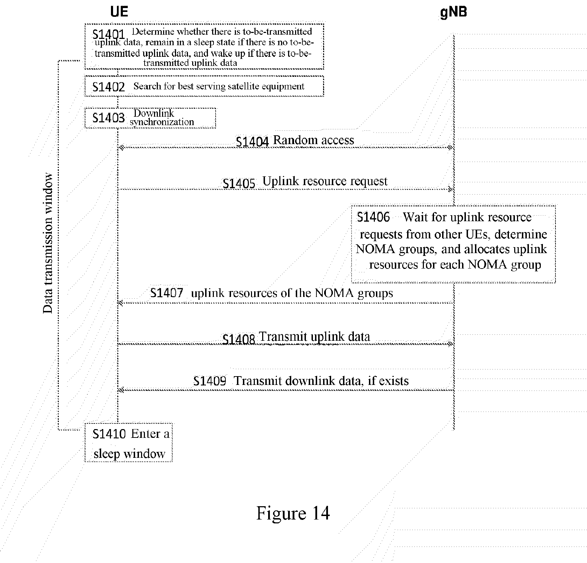

Figure 14 is a signaling flowchart of a data transmission process in a case that a UE is not configured with unlicensed resources and uses NOMA according to the embodiment of the present disclosure. In Figure 14, the UE may be implemented by the electronic equipment 1200. In step S1401, the UE determines whether there is to-be-transmitted uplink data on arrival of a data transmission window. The UE remains in a sleep state in a case that there is no to-be-transmitted uplink data; and the UE wakes up in a case that there is to-be-transmitted uplink data. In step S1402, the UE determines best serving satellite equipment corresponding to the data transmission window according to parameters of the sleep mode, and searches for the best serving satellite equipment. In step S1403, the UE performs downlink synchronization. In step S1404, the UE randomly accesses a gNB. In step S1405, the UE transmits an uplink resource request to the gNB to request resources for transmitting uplink data. In step S1406, the gNB waits for uplink resource requests from other UEs, groups UEs having to-be-transmitted uplink data into one or more NOMA groups, and allocates uplink resources for UEs of the NOMA groups, respectively. In step S1407, the gNB broadcasts the NOMA group information. In step S1408, the UE transmits uplink data to the gNB using the uplink resources included in the NOMA group information. In step S1409, the gNB transmits downlink data, if exists, to the UE. In step S1410, the data transmission window ends and the UE enters the sleep window.

According to an embodiment of the present disclosure, as shown in Figure 12, the electronic equipment 1200 may further include a timing unit 1260 for controlling a timer.

In a case that the electronic equipment 1200 is configured with unlicensed resources, the timing unit 1260 may start the timer after the electronic equipment 1200 accesses the best service satellite device. Further, after the timer expires, the electronic equipment 1200 may transmit uplink data to the network side equipment using the unlicensed resources allocated by the network side equipment.

According to an embodiment of the present disclosure, after the electronic equipment 1200 receives the parameters of the sleep mode and enters the sleep state, the network side equipment may release the unlicensed resources of the electronic equipment 1200 for use by other user equipment. Further, after the electronic equipment 1200 accesses the best serving satellite equipment, the network side equipment may activate the unlicensed resources of the electronic equipment 1200 again, that is, take over the unlicensed resources of the electronic device 1200 from other user equipment. Similarly, after the electronic equipment 1200 transmits the uplink data using the unlicensed resources and enters the sleep state again, the network side equipment may release the unlicensed resources of the electronic equipment 1200 again. In addition, the network side equipment may deactivate the unlicensed resources of the user equipment 1200 through an RRC configuration when necessary.

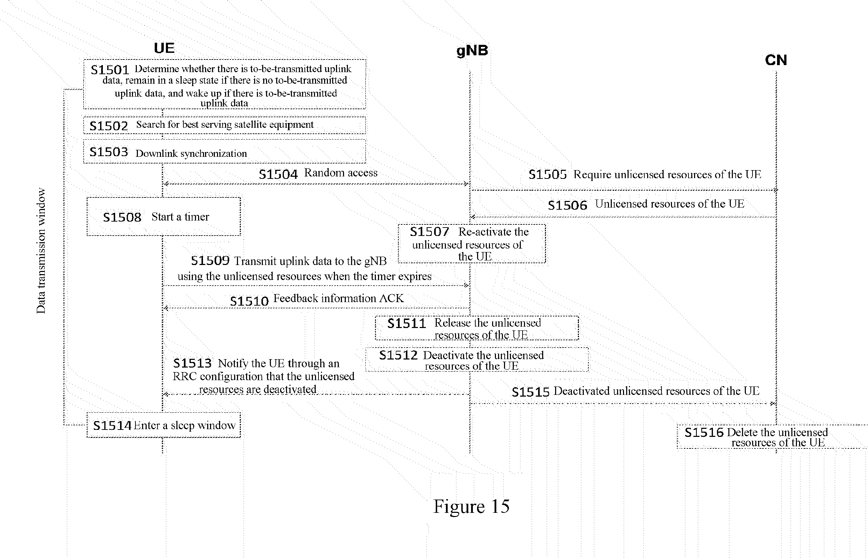

Figure 15 is a signaling flowchart of a data transmission process in a case that a UE is configured with unlicensed resources and does not use NOMA according to an embodiment of the present disclosure. In Figure 15, the UE may be implemented by the electronic equipment 1200. In step S1501, the UE determines whether there is to-be-transmitted uplink data on arrival of a data transmission window. The UE remains in a sleep state in a case that there is no to-be-transmitted uplink data; and the UE wakes up in a case that there is to-be-transmitted uplink data. In step S1502, the UE determines best serving satellite device corresponding to the data transmission window according to parameters of the sleep mode, and searches for the best serving satellite device. In step S1503, the UE performs downlink synchronization. In step S1504, the UE randomly accesses a gNB. In step S1505, the gNB requires unlicensed resources of the UE from a CN. In step S1506, the CN transmits the unlicensed resources of the UE to the gNB. In step S1507, the gNB takes over the unlicensed resources in a case that the unlicensed resources are used by another UE, that is, the gNB re-activates the unlicensed resources of the UE. In step S1508, the UE starts a timer immediately after randomly accesses the gNB. In step S1509, the UE transmits uplink data to the gNB using the unlicensed resources when the timer expires. In step S1510, the gNB transmits feedback information for the uplink data, such as an ACK. In step S1511, the gNB releases the unlicensed resources of the UE for use by other UEs. Alternatively, the gNB deactivates the unlicensed resources of the UE when necessary in step 1512. In step S1513, the gNB notifies the UE through an RRC configuration that the unlicensed resources are deactivated. In step S1514, the UE enters a sleep window after the data transmission window ends. In step S1515, the gNB transmits the deactivated unlicensed resources of the UE to the CN. In step S1516, the CN deletes the unlicensed resources of the UE from unlicensed resources of UEs stored in the CN.

Although communication between the UE and the gNB are shown in Figure 13 to Figure 15, it should be understood that the UE may communicate with the gNB directly in a case that the gNB is located on satellite equipment, and may communicate with the gNB through satellite equipment in a case that the gNB is located in a ground base station. Similarly, although communication between the CN and the gNB are shown in Figure 15, it should be understood that the gNB may communicate with the CN through a ground gateway in a case that the gNB is located on satellite equipment.

Described above are operations of the electronic equipment 1200 on arrival of a data transmission window.

According to an embodiment of the present disclosure, in a case that data is not urgent, the electronic equipment 1200 may store the data in a cache and wait for a next data transmission window to operate as the embodiment described above. In a case that data is urgent, the satellite determination unit 1250 may determine the best serving satellite equipment according to the ephemeris information of candidate satellites included in the parameters of the sleep mode, so that the electronic equipment 1200 can wake up in the sleep window to access the best serving satellite equipment and transmit the urgent data.

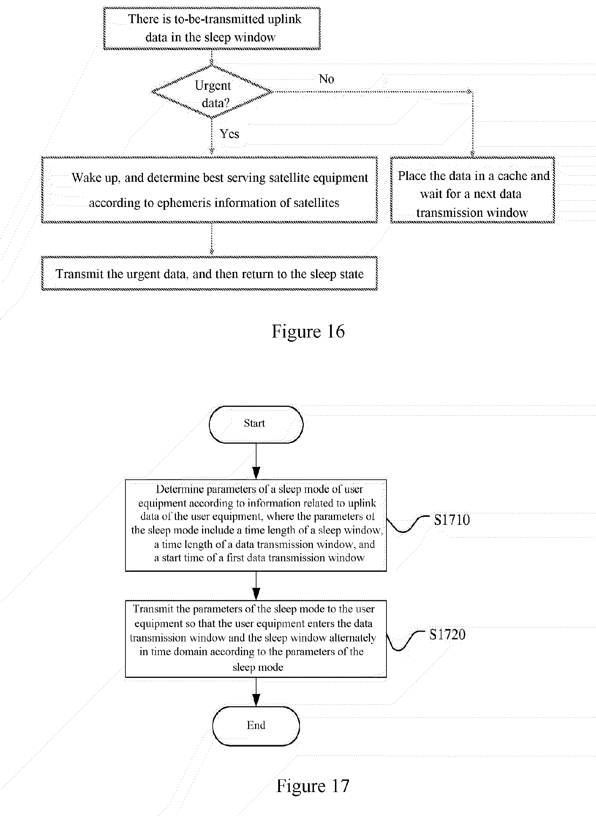

Figure 16 is a schematic diagram showing a processing process of a UE in a case that the UE has data to transmit according to an embodiment of the present disclosure. As shown in Figure 16, in a case that there is to-be-transmitted uplink data in the sleep window, the electronic equipment 1200 needs to determine whether the data is urgent. In a case that the data is not urgent, the electronic equipment 1200 places the data in a cache and wait for a next data transmission window. In a case that the data is urgent, the electronic equipment 1200 wakes up in the sleep window and determines best serving satellite equipment according to ephemeris information of candidate satellite equipment, and transmit the urgent data using the best serving satellite equipment. After transmitting the urgent data, the electronic equipment 1200 may return to the sleep state.

As described above, the electronic equipment 1200 according to the embodiments of the present disclosure can enter the data transmission window and the sleep window alternately in the time domain according to the parameters of the sleep mode. Hence, energy is saved. Further, the electronic equipment 1200 can transmit the uplink information using the unlicensed resources, so that signaling overhead is saved and energy consumption is reduced. In addition, the electronic equipment 1200 can transmit urgent data in the sleep window, so that a delay of transmission of the urgent data is reduced. In summary, with the electronic equipment 1200 according to the embodiments of the present disclosure, energy consumption of user equipment in the NTN is reduced.

### <4. Method embodiment>

A wireless communication method according to an embodiment of the present disclosure is described in detail below, where the method is performed by electronic equipment 200 in a core network of a wireless communication system.

Figure 17 is a flowchart of a wireless communication method performed by electronic equipment 200 in a core network of a wireless communication system according to an embodiment of the present disclosure.

Reference is made to Figure 17. In step S1710, parameters of a sleep mode of user equipment are determined according to information related to uplink data of the user equipment. The parameters of the sleep mode include a time length of a sleep window, a time length of a data transmission window, and a start time of a first data transmission window.

Next, in step S1720, the parameters of the sleep mode are transmitted to the user equipment so that the user equipment enters the data transmission window and the sleep window alternately in time domain according to the parameters of the sleep mode.

In a preferred embodiment, the information related to the uplink data includes at least one of: a size of the uplink data, a period of the uplink data, and a maximum delay allowed by the uplink data.

In a preferred embodiment, determining the parameters of the sleep mode of the user equipment further includes: determining the parameters of the sleep mode according to location information of the user equipment and radio frequency characteristics of the user equipment. The parameters of the sleep mode further include information on best serving satellite equipment corresponding to each data transmission window.

In a preferred embodiment, the wireless communication method further includes: determining NOMA groups according to information related to uplink data of multiple user equipment; and determining identical parameters of the sleep mode for multiple user equipment in a same NOMA group.

In a preferred embodiment, the wireless communication method further includes: receiving the information related to the uplink data from satellite equipment serving the user equipment.

In a preferred embodiment, the wireless communication method further includes: transmitting the parameters of the sleep mode of the user equipment to non-transparent satellite equipment that will serve the user equipment, or ground base station equipment connected with transparent satellite equipment that will serve the user equipment.

According to an embodiment of the present disclosure, a subject that executes the method may be the electronic equipment 200 according to the above embodiment of the present disclosure. Therefore, all the above embodiments related to the electronic equipment 200 are applicable here.

A wireless communication method according to an embodiment of the present disclosure is described in detail below, where the method is performed by electronic equipment 1200 serving as user equipment in a wireless communication system.

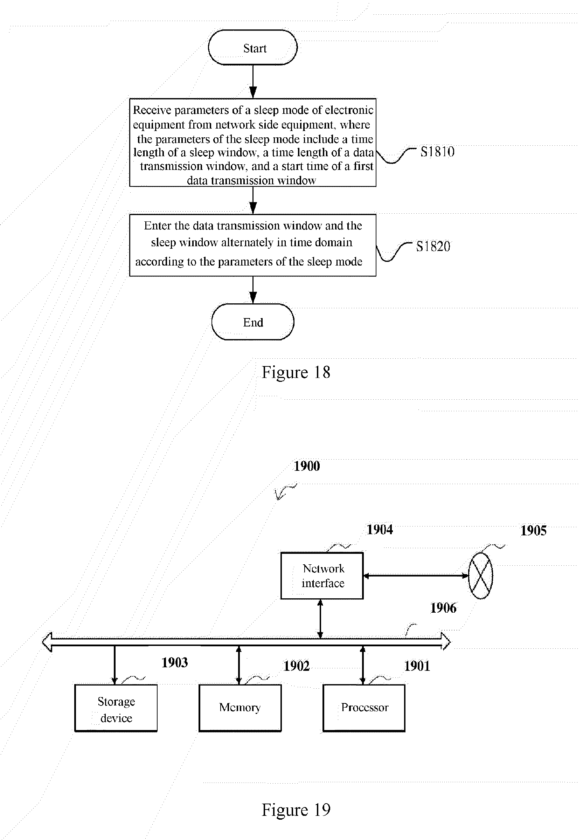

Figure 18 is a flowchart of a wireless communication method performed by electronic equipment 1200 serving as user equipment in a wireless communication system according to an embodiment of the present disclosure.

Reference is made to Figure 18. In step S1810, parameters of a sleep mode of electronic equipment 1200 are received from network side equipment. The parameters of the sleep mode include a time length of a sleep window, a time length of a data transmission window, and a start time of a first data transmission window.

Next, in step S1820, the electronic equipment 1200 enters the data transmission window and the sleep window alternately in time domain according to the parameters of the sleep mode.

In a preferred embodiment, the wireless communication method further includes: transmitting information related to uplink data of the electronic equipment 1200 to the network side equipment. The information related to the uplink data includes at least one of: a size of the uplink data, a period of the uplink data, and a maximum delay allowed by the uplink data.

In a preferred embodiment, the wireless communication method further includes: transmitting location information of the electronic equipment 1200 and radio frequency characteristics of the electronic equipment 1200 to the network side equipment. The parameters of the sleep mode further include information on best serving satellite equipment corresponding to each data transmission window.

In a preferred embodiment, the wireless communication method further includes: transmitting an uplink resource request to the network side equipment; receiving, from the network side equipment, uplink resources allocated by the network side equipment; and transmitting the information related to the uplink data using the uplink resources.

In a preferred embodiment, the wireless communication method further includes: receiving, from the network side equipment, unlicensed resources allocated by the network side equipment; and transmitting the information related to the uplink data using the unlicensed resources.

In a preferred embodiment, the wireless communication method further includes: for each data transmission window, determining whether there is to-be-transmitted uplink data in the data transmission window; remaining in a sleep state in a case that there is no to-be-transmitted uplink data; and accessing best serving satellite equipment corresponding to the data transmission window, in a case that there is to-be transmitted uplink data.

In a preferred embodiment, the wireless communication method further includes: starting a timer after the electronic equipment 1200 accesses the best serving satellite equipment; and transmitting, after the timer expires, the uplink data to the network side equipment using the unlicensed resources allocated by the network side equipment.

In a preferred embodiment, the wireless communication method further includes: determining the best serving satellite equipment according to ephemeris information of respective satellite equipment, in a case that there is to-be-transmitted uplink data in a sleep window; and accessing the best serving satellite equipment.

In a preferred embodiment, the network side equipment is non-transparent satellite equipment that serves the electronic equipment 1200, or ground base station equipment connected with transparent satellite equipment that serves the electronic equipment 1200.

According to the embodiments of the present disclosure, a subject that executes the method may be the electronic equipment 1200 according to the above embodiments of the present disclosure, therefore, all the above embodiments related to the electronic equipment 1200 are applicable here.

### <5. Application example>

The technology of the present disclosure is applicable to various products.

For example, the electronic equipment 200 may be implemented as a serve in any type, such as a tower server, a rack server, and a blade server. The electronic equipment 200 may be a control module mounted on a server (such as an integrated circuitry module including a single wafer, and a card or blade inserted into a slot of a blade server).

The network side equipment may be implemented as base station equipment in any type, such as a macro eNB or a small eNB, and may be implemented as a gNB (a base station in a 5G system) in any type. The small eNB may be an eNB covering a cell smaller than a macro cell, such as a pico eNB, a micro eNB, or a home (femto) eNB. Alternatively, the base station may be implemented as any other type of base station, such as a NodeB or a base transceiver station (BTS). The base station may include a body (which is also referred to as base station equipment) configured to control wireless communication and one or more remote radio heads (RRHs) that are arranged in a different place from the body.

The user equipment may be implemented as a mobile terminal (such as a smartphone, a tablet personal computer (PC), a notebook PC, a portable game terminal, a portable/dongle-type mobile router, and a digital camera), or an in-vehicle terminal (such as a car navigation device). The user equipment may also be implemented as a terminal that performs machine-to-machine (M2M) communication (which is also referred to as a machine type communication (MTC) terminal). In addition, the user equipment may be a wireless communication module (such as an integrated circuit module including a single wafer) installed on each of the user equipment described above.

### [Application examples regarding a server]

Figure 19 is a block diagram of an example of a server 1900 which can implement the electronic equipment 200 according to the present disclosure. The server 1900 includes a processor 1901, a memory 1902, a storage device 1903, a network interface 1904, and a bus 1906.

The processor 1901 may be, for example, a central processing unit (CPU) or a digital signal processor (DSP), and controls functions of the server 1900. The memory 1902 includes a random access memory (RAM) and a read-only memory (ROM), and stores data and a program executed by the processor 1901. The storage device 1903 may include a storage medium, such as a semiconductor memory and a hard disk.

The network interface 1904 is a wired communication interface for connecting the server 1900 to a wired communication network 1905. The wired communication network 1905 may be a core network such as an Evolved Packet Core (EPC), or a packet data network (PDN) such as the Internet.

The bus 1906 connects the processor 1901, the memory 1902, the storage device 1903, and the network interface 1904 to each other. The bus 1906 may include two or more buses having different speeds (such as a high-speed bus and a low-speed bus).

In the server 1900 shown in Figure 19, the determination unit 210 and the division unit 230 described with reference to Figure 2 may be implemented by the processor 1901, and the communication unit 220 described with reference to Figure 2 may be implemented by the network interface 1904. For example, the processor 1901 may perform functions of determining the parameters of the sleep mode and determining the NOMA groups by executing instructions stored in the memory 1902 or the storage device 1903.

### <Application examples of a base station>

### (First application example)

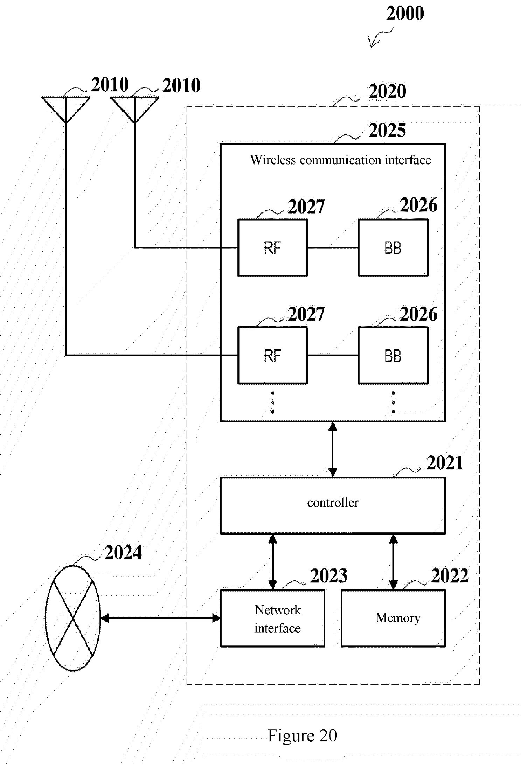

Figure 20 is a block diagram showing a first example of a schematic configuration of an eNB to which the technology of the present disclosure may be applied. The eNB 2000 includes a single or multiple antennas 2010 and base station equipment 2020. The base station equipment 2020 and each of the antennas 2010 may be connected to each other via a RF cable.

Each of the antennas 2010 includes a single or multiple antenna elements (such as multiple antenna elements included in a multiple-input multiple-output (MIMO) antenna), and are used for transmitting and receiving wireless signals by the base station equipment 2020. The eNB 2000 may include multiple antennas 2010, as shown in Figure 20. For example, the multiple antennas 2010 may be compatible with multiple frequency bands used by the eNB 2000. Although Figure 20 shows an example in which the eNB 2000 includes multiple antennas 2010, the eNB 2000 may include a single antenna 2010.

The base station equipment 2020 includes a controller 2021, a memory 2022, a network interface 2023, and a wireless communication interface 2025.

The controller 2021 may be, for example, a CPU or a DSP, and operates various high-level functions of the base station equipment 2020. For example, the controller 2021 generates a data packet according to data in a signal processed by the wireless communication interface 2025, and transfers the generated packet via the network interface 2023. The controller 2021 may bundle data from multiple baseband processors to generate a bundled packet, and transfer the generated bundled packet. The controller 2021 may have logical functions of performing control such as radio resource control, radio bearer control, mobility management, admission control, and scheduling. The control may be performed in conjunction with an adjacent eNB or a core network node. The memory 2022 includes a RAM and a ROM, and stores a program executed by the controller 2021, and various types of control data (such as a terminal list, transmission power data, and scheduling data).

The network interface 2023 is a communication interface for connecting the base station equipment 2520 to a core network 2024. The controller 2021 may communicate with a core network node or another eNB via the network interface 2023. In this case, the eNB 2000, and the core network node or the other eNB may be connected to each other through a logical interface (such as an S1 interface and an X2 interface). The network interface 2023 may be a wired communication interface or a wireless communication interface for a wireless backhaul line. In a case that the network interface 2023 is a wireless communication interface, the network interface 2023 may use a higher frequency band for wireless communication than a frequency band used by the wireless communication interface 2025.

The wireless communication interface 2025 supports any cellular communication scheme (such as Long Term Evolution (LTE) and LTE-Advanced), and provides wireless connection to a terminal positioned in a cell of the eNB 2000 via the antenna 2010. The wireless communication interface 2025 may typically include, for example, a baseband (BB) processor 2026 and an RF circuit 2027. The BB processor 2026 may perform, for example, coding/decoding, modulation/demodulation and multiplexing/de-multiplexing, and perform various types of signal processes of layers (for example, L1, media access control (MAC), radio link control (RLC) and packet data convergence protocol (PDCP)). Instead of the controller 2021, the BB processor 2026 may have a part or all of the above logical functions. The BB processor 2026 may be a memory storing a communication control program, or a module including a processor and a related circuit configured to execute the program. Updating the program may change the functions of the BB processor 2026. The module may be a card or a blade inserted into a slot of the base station equipment 2020. Alternatively, the module may be a chip mounted on the card or the blade. In addition, the RF circuit 2027 may include, for example, a frequency mixer, a filter or an amplifier, and transmits and receives wireless signals via the antenna 2010.

As shown in Figure 20, the wireless communication interface 2025 may include multiple BB processors 2026. For example, the multiple BB processors 2026 may be compatible with multiple frequency bands used by the eNB 2000. As shown in Figure 20, the wireless communication interface 2025 may include multiple RF circuits 2027. For example, the multiple RF circuits 2027 may be compatible with multiple antenna elements. Although Figure 20 shows an example in which the wireless communication interface 2025 includes multiple BB processors 2026 and multiple RF circuits 2027, the wireless communication interface 2025 may include a single BB processor 2026 or a single RF circuit 2027.

### (Second application example)

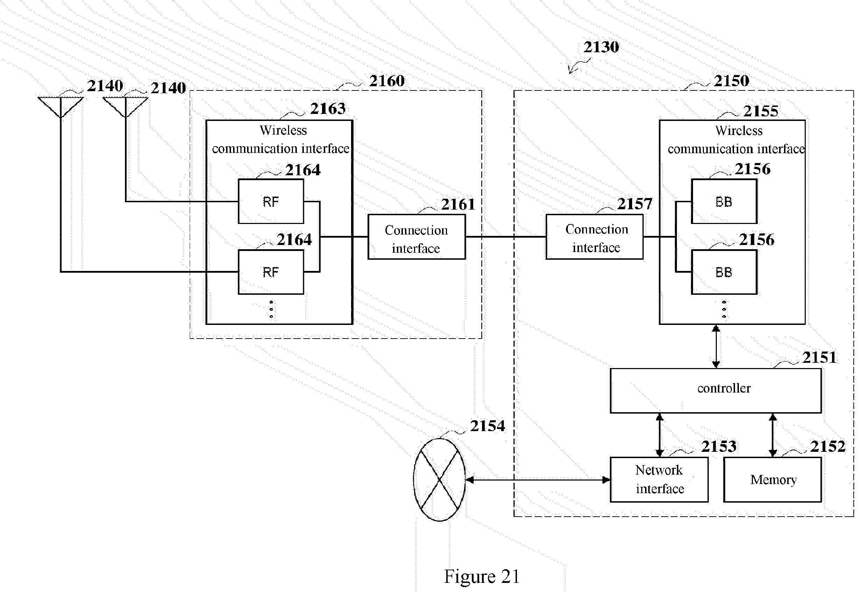

Figure 21 is a block diagram showing a second example of a schematic configuration of an eNB to which the technology of the present disclosure may be applied. An eNB 2130 includes a single or multiple antennas 2140, base station equipment 2150 and an RRH 2160. The RRH 2160 and the antennas 2140 may be connected to each other via an RF cable. The base station equipment 2150 and the RRH 2160 may be connected to each other via a high-speed line such as an optical fiber cable.

Each of the antennas 2140 includes a single or multiple antennal elements (such as multiple antenna elements included in a multiple-input multiple-output (MIMO) antenna), and is used for the RRH 2160 to transmit and receive wireless signals. As shown in Figure 21, the eNB 2130 may include multiple antennas 2140. For example, the multiple antennas 2140 may be compatible with multiple frequency bands used by the eNB 2130. Although Figure 21 shows an example in which the eNB 2130 includes multiple antennas 2140, the eNB 2130 may include a single antenna 2140.

The base station device 2150 includes a controller 2151, a memory 2152, a network interface 2153, a wireless communication interface 2155, and a connection interface 2157. The controller 2151, the memory 2152, and the network interface 2153 are the same as the controller 2021, the memory 2022, and the network interface 2023 described with reference to Figure 20.

The wireless communication interface 2155 supports any cellular communication scheme (such as LTE and LTE-advanced), and provides wireless communication with a terminal located in a sector corresponding to the RRH 2160 via the RRH 2160 and the antenna 2140. The wireless communication interface 2155 may typically include, for example, a BB processor 2156. The BB processor 2156 is the same as the BB processor 2026 described with reference to Figure 20, except that the BB processor 2156 is connected to an RF circuit 2164 of the RRH 2160 via the connection interface 2157. As show in Figure 21, the wireless communication interface 2155 may include multiple BB processors 2156. For example, the multiple BB processors 2156 may be compatible with the multiple frequency bands used by the eNB 2130. Although Figure 21 shows an example in which the wireless communication interface 2155 includes multiple BB processors 2156, the wireless communication interface 2155 may include a single BB processor 2156.

The connection interface 2157 is an interface for connecting the base station device 2150 (the wireless communication interface 2155) to the RRH 2160. The connection interface 2157 may be a communication module for communication in the above-described high speed line that connects the base station equipment 2150 (the wireless communication interface 2155) to the RRH 2160.

The RRH 2160 includes a connection interface 2161 and a wireless communication interface 2163.

The connection interface 2161 is an interface for connecting the RRH 2160 (the wireless communication interface 2163) to the base station equipment 2150. The connection interface 2161 may also be a communication module for communication in the above high-speed line.

The wireless communication interface 2163 transmits and receives wireless signals via the antenna 2140. The wireless communication interface 2163 may typically include, for example, the RF circuit 2164. The RF circuit 2164 may include, for example, a frequency mixer, a filter and an amplifier, and transmits and receives wireless signals via the antenna 2140. The wireless communication interface 2163 may include multiple RF circuits 2164, as shown in Figure 21. For example, the multiple RF circuits 2164 may support multiple antenna elements. Although Figure 21 shows the example in which the wireless communication interface 2163 includes multiple RF circuits 2164, the wireless communication interface 2163 may include a single RF circuit 2164.

### [Application examples of a terminal device]

### (First application example)

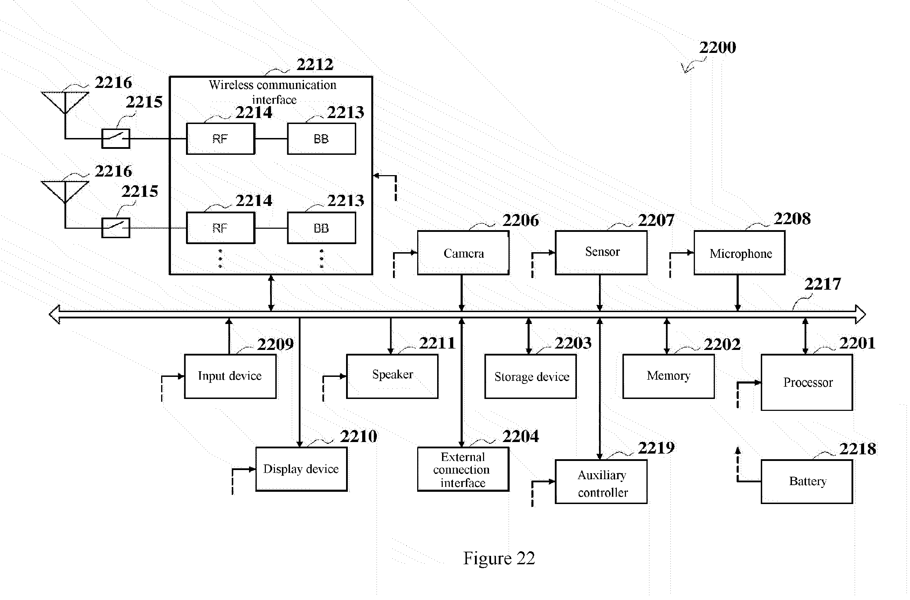

Figure 22 is a block diagram showing an example of a schematic configuration of a smartphone 2200 to which the technology according to the present disclosure may be applied. The smartphone 2200 includes a processor 2201, a memory 2202, a storage device 2203, an external connection interface 2204, a camera 2206, a sensor 2207, a microphone 2208, an input device 2209, a display device 2210, a speaker 2211, a wireless communication interface 2212, one or more antenna switches 2215, one or more antennas 2216, a bus 2217, a battery 2218, and an auxiliary controller 2219.

The processor 2201 may be, for example, a CPU or a system on a chip (SoC), and controls functions of an application layer and another layer of the smartphone 2200. The memory 2202 includes a RAM and a ROM, and stores a program executed by the processor 2201 and data. The storage 2203 may include a storage medium such as a semiconductor memory and a hard disk. The external connection interface 2204 is an interface for connecting an external device (such as a memory card and a universal serial bus (USB) device) to the smartphone 2200.

The camera 2206 includes an image sensor (such as a charge coupled device (CCD) and a complementary metal oxide semiconductor (CMOS)), and generates a captured image. The sensor 2207 may include a group of sensors, such as a measurement sensor, a gyro sensor, a geomagnetism sensor, and an acceleration sensor. The microphone 2208 converts sounds inputted to the smartphone 2200 to audio signals. The input device 2209 includes, for example, a touch sensor configured to detect touch onto a screen of the display device 2210, a keypad, a keyboard, a button, or a switch, and receives an operation or information inputted from a user. The display device 2210 includes a screen (such as a liquid crystal display (LCD) and an organic light-emitting diode (OLED) display), and displays an output image of the smartphone 2200. The speaker 2211 converts audio signals outputted from the smartphone 2200 to sounds.

The wireless communication interface 2212 supports any cellular communication scheme (such as LTE and LTE-advanced), and performs wireless communication. The wireless communication interface 2212 may include, for example, a BB processor 2213 and an RF circuit 2214. The BB processor 2213 may perform, for example, encoding/decoding, modulating/demodulating, and multiplexing/de-multiplexing, and perform various types of signal processing for wireless communication. The RF circuit 2214 may include, for example, a mixer, a filter and an amplifier, and transmits and receives wireless signals via the antenna 2216. The wireless communication interface 2212 may be a chip module having the BB processor 2213 and the RF circuit 2214 integrated thereon. The wireless communication interface 2212 may include multiple BB processors 2213 and multiple RF circuits 2214, as shown in Figure 22. Although Figure 22 shows the example in which the wireless communication interface 2212 includes multiple BB processors 2213 and multiple RF circuits 2214, the wireless communication interface 2212 may include a single BB processor 2213 or a single RF circuit 2214.

Furthermore, in addition to a cellular communication scheme, the wireless communication interface 2212 may support another type of wireless communication scheme such as a short-distance wireless communication scheme, a near field communication scheme, and a wireless local area network (LAN) scheme. In this case, the wireless communication interface 2212 may include the BB processor 2213 and the RF circuit 2214 for each wireless communication scheme.

Each of the antenna switches 2215 switches connection destinations of the antennas 2216 among multiple circuits (such as circuits for different wireless communication schemes) included in the wireless communication interface 2212.

Each of the antennas 2216 includes a single or multiple antenna elements (such as multiple antenna elements included in an MIMO antenna) and is used for the wireless communication interface 2212 to transmit and receive wireless signals. The smartphone 2200 may include the multiple antennas 2216, as shown in Figure 22. Although Figure 22 shows the example in which the smartphone 2200 includes multiple antennas 2216, the smartphone 2200 may include a single antenna 2216.

Furthermore, the smartphone 2200 may include the antenna 2216 for each wireless communication scheme. In this case, the antenna switches 2215 may be omitted from the configuration of the smartphone 2200.

The bus 2217 connects the processor 2201, the memory 2202, the storage device 2203, the external connection interface 2204, the camera 2206, the sensor 2207, the microphone 2208, the input device 2209, the display device 2210, the speaker 2211, the wireless communication interface 2212, and the auxiliary controller 2219 to each other. The battery 2218 supplies power to blocks of the smartphone 2200 shown in Figure 22 via feeder lines, which are partially shown as dashed lines in Figure 22. The auxiliary controller 2219 operates a minimum necessary function of the smartphone 2200, for example, in a sleep mode.

In the smartphone 2200 shown in Figure 22, the processing unit 1220, the generation unit 1230, the resource determination unit 1240, the satellite determination unit 1250, and the timing unit 1260 described with reference to Figure 12 may be implemented by the processor 2201 or the auxiliary controller 2219. At least a part of the functions may be implemented by the processor 2201 or the auxiliary controller 2219. For example, the processor 2201 or the auxiliary controller 2219 may perform the functions of entering the data transmission window and the sleep window alternately in the time domain according to the parameters of the sleep mode, generating the SPC request information, determining resources for transmitting the SPC request information, determining serving satellite, and timing, by executing instructions stored on the memory 2202 or the storage device 2203.

### (Second application example)

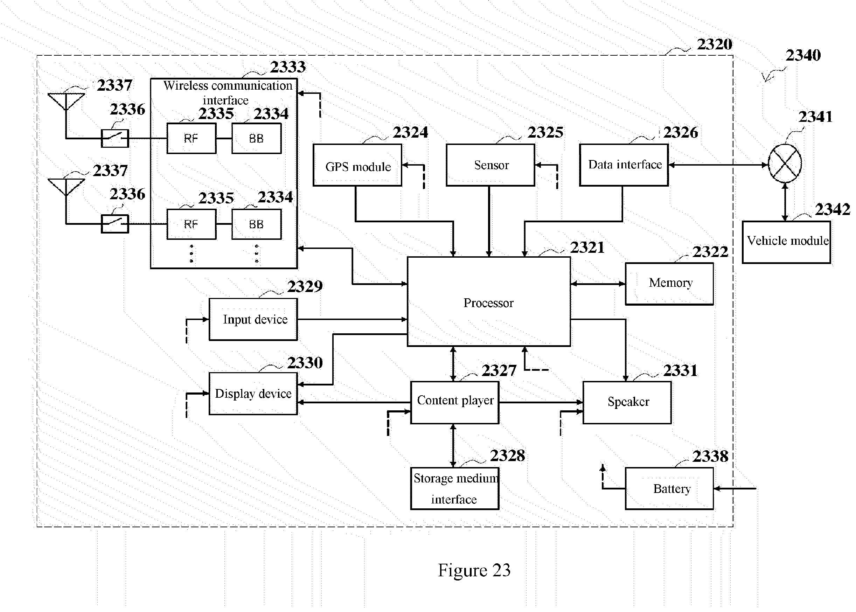

Figure 23 is a block diagram showing an example of a schematic configuration of a navigation apparatus 2320 to which the technology according to the present disclosure may be applied. The navigation apparatus 2320 includes a processor 2321, a memory 2322, a global positioning system (GPS) module 2324, a sensor 2325, a data interface 2326, a content player 2327, a storage medium interface 2328, an input device 2329, a display device 2330, a speaker 2331, a wireless communication interface 2333, one or more antenna switches 2336, one or more antennas 2337, and a battery 2338.

The processor 2321 may be, for example a CPU or a SoC, and controls a navigation function and additional function of the navigation apparatus 2320. The memory 2322 includes RAM and ROM, and stores a program executed by the processor 2321, and data.

The GPS module 2324 determines a position (such as latitude, longitude and altitude) of the navigation apparatus 2320 by using GPS signals received from a GPS satellite. The sensor 2325 may include a group of sensors such as a gyro sensor, a geomagnetic sensor and an air pressure sensor. The data interface 2326 is connected to, for example, an in-vehicle network 2341 via a terminal that is not shown, and acquires data (such as vehicle speed data) generated by the vehicle.

The content player 2327 reproduces content stored in a storage medium (such as a CD and DVD) that is inserted into the storage medium interface 2328. The input device 2329 includes, for example, a touch sensor configured to detect touch on a screen of the display device 2330, a button, or a switch, and receives an operation or information inputted from a user. The display device 2330 includes a screen such as an LCD or OLED display, and displays an image of the navigation function or reproduced content. The speaker 2331 outputs a sound for the navigation function or the reproduced content.

The wireless communication interface 2333 supports any cellular communication scheme (such as LTE and LTE-Advanced), and performs wireless communication. The wireless communication interface 2333 may typically include, for example, a BB processor 2334 and an RF circuit 2335. The BB processor 2334 may perform, for example, encoding/decoding, modulating/demodulating and multiplexing/demultiplexing, and perform various types of signal processing for wireless communication. The RF circuit 2335 may include, for example, a mixer, a filter and an amplifier, and transmits and receives wireless signals via the antenna 2337. The wireless communication interface 2333 may also be a chip module having the BB processor 2334 and the RF circuit 2335 integrated thereon. As shown in Figure 23, the wireless communication interface 2333 may include multiple BB processors 2334 and multiple RF circuits 2335. Although Figure 23 shows the example in which the wireless communication interface 2333 includes multiple BB processors 2334 and multiple RF circuits 2335, the wireless communication interface 2333 may include a single BB processor 2334 and a single RF circuit 2335.

Furthermore, in addition to a cellular communication scheme, the wireless communication interface 2333 may support another type of wireless communication scheme such as a short-distance wireless communication scheme, a near field communication scheme, and a wireless LAN scheme. In this case, the wireless communication interface 2333 may include the BB processor 2334 and the RF circuit 2335 for each wireless communication scheme.

Each of the antenna switches 2336 switches connection destinations of the antennas 2337 among multiple circuits (such as circuits for different wireless communication schemes) included in the wireless communication interface 2333.

Each of the antennas 2337 includes a single or multiple antenna elements (such as multiple antenna elements included in an MIMO antenna), and is used for the wireless communication interface 2333 to transmit and receive wireless signals. As shown in Figure 23, the car navigation apparatus 2320 may include multiple antennas 2337. Although Figure 23 shows the example in which the car navigation apparatus 2320 includes multiple antennas 2337, the car navigation apparatus 2320 may include a single antenna 2337.

Furthermore, the car navigation apparatus 2320 may include the antenna 2337 for each wireless communication scheme. In this case, the antenna switches 2336 may be omitted from the configuration of the navigation apparatus 2320.

The battery 2338 supplies power to the blocks of the car navigation apparatus 2320 shown in Figure 23 via feeder lines that are partially shown as dash lines in Figure 23. The battery 2338 accumulates power supplied from the vehicle.

In the car navigation apparatus 2320 shown in Figure 23, the processing unit 1210, the generation unit 1230, the resource determination unit 1240, the satellite determination unit 1250, and the timing unit 1260 described with reference to Figure 12 may be implemented by the processor 2321. At least a part of the functions may be implemented by the processor 2321. For example, the processor 2321 may perform the functions of entering the data transmission window and the sleep window alternately in the time domain according to the parameters of the sleep mode, generating the SPC request information, determining resources for transmitting the SPC request information, determining serving satellite, and timing, by executing instructions stored on the memory 2302 or the storage device 2303.

The technical solution of the present disclosure may be implemented as an in-vehicle system (or vehicle) 2840 including the car navigation apparatus 2320, the in-vehicle network 2341, and one or more blocks of a vehicle module 2342. The vehicle module 2342 generates vehicle data such as vehicle speed, engine speed, and fault information, and outputs the generated data to the in-vehicle network 2341.

The preferred embodiments of the present disclosure are described above with reference to the drawings, but the present disclosure is not limited to the above examples. Various alternations and modifications may be obtained by those skilled in the art within the scope of the claims, and it should be understood that these alternations and modifications shall naturally fall within the technical scope of the present disclosure.

For example, a unit shown by a dashed box in the functional block diagram shown in the drawings indicates that the functional unit is optional in the corresponding device, and the optional functional units may be combined in an appropriate manner to achieve a desired function.

For example, multiple functions included in one unit in the above embodiments may be implemented by separate devices. Alternatively, multiple functions implemented by multiple units in the above embodiments may be implemented by separate devices, respectively. In addition, one of the above functions may be implemented by multiple units. Apparently, such configurations are within the technical scope of the present disclosure.

In this specification, the steps described in the flowchart include not only processes performed in time series as the order described, but also processes performed in parallel or individually instead of having to be performed in time series. Further, even in the steps processed in time series, the order can be appropriately changed.

Although the embodiments of the present disclosure have been described above in detail in connection with the drawings, it is appreciated that the embodiments described above are merely illustrative rather than limitative for the present disclosure. Those skilled in the art can make various modifications and variations to the above embodiments without departing from the spirit and scope of the present disclosure. Therefore, the scope of the present disclosure is defined merely by the appended claims and equivalents thereof.

## Claims

1. Electronic equipment, comprising processing circuitry configured to:
determine parameters of a sleep mode of user equipment according to information related to uplink data of the user equipment, the parameters of the sleep mode including a time length of a sleep window, a time length of a data transmission window, and a start time of a first data transmission window; and
transmit the parameters of the sleep mode to the user equipment so that the user equipment enters the data transmission window and the sleep window alternately in time domain according to the parameters of the sleep mode.

2. The electronic equipment according to claim 1, wherein the information related to the uplink data includes at least one of: a size of the uplink data, a period of the uplink data, and a maximum delay allowed by the uplink data.

3. The electronic equipment according to claim 1, wherein the processing circuitry is further configured to:
further determine the parameters of the sleep mode according to location information of the user equipment and radio frequency characteristics of the user equipment, the parameters of the sleep mode further including information on best serving satellite equipment corresponding to each data transmission window.

4. The electronic equipment according to claim 1, wherein the processing circuitry is further configured to:
determine Non-Orthogonal Multiple Access NOMA groups according to information related to uplink data of a plurality of user equipment; and
determine identical parameters of the sleep mode for a plurality of user equipment in one NOMA group.

5. The electronic equipment according to claim 1, wherein the processing circuitry is further configured to:
receive the information related to the uplink data from satellite equipment serving the user equipment.

6. The electronic equipment according to claim 1, wherein the processing circuitry is further configured to:
transmit the parameters of the sleep mode of the user equipment to non-transparent satellite equipment that will serve the user equipment, or ground base station equipment connected with transparent satellite equipment that will serve the user equipment.

7. Electronic equipment, comprising processing circuitry configured to:
receive parameters of a sleep mode of the electronic equipment from network side equipment, the parameters of the sleep mode including a time length of a sleep window, a time length of a data transmission window, and a start time of a first data transmission window; and
enter the data transmission window and the sleep window alternately in time domain according to the parameters of the sleep mode.

8. The electronic equipment according to claim 7, wherein the processing circuitry is further configured to:
transmit information related to uplink data of the electronic equipment to the network side equipment, the information related to the uplink data including at least one of: a size of the uplink data, a period of the uplink data, and a maximum delay allowed by the uplink data.

9. The electronic equipment according to claim 7, wherein the processing circuitry is further configured to:
transmit location information of the electronic equipment and radio frequency characteristics of the electronic equipment to the network side equipment, and
wherein the parameters of the sleep mode further include information on best serving satellite equipment corresponding to each data transmission window.

10. The electronic equipment according to claim 8, wherein the processing circuitry is further configured to:
transmit an uplink resource request to the network side equipment;
receive, from the network side equipment, uplink resources allocated by the network side equipment; and
transmit the information related to the uplink data using the uplink resources.

11. The electronic equipment according to claim 8, wherein the processing circuitry is further configured to:
receive, from the network side equipment, unlicensed resources allocated by the network side device; and
transmit the information related to the uplink data using the unlicensed resource.

12. The electronic equipment according to claim 9, wherein the processing circuitry is further configured to:
for each data transmission window,
determine whether there is to-be-transmitted uplink data in the data transmission window;
remain in a sleep state in a case that there is no to-be-transmitted uplink data; and
access best serving satellite equipment corresponding to the data transmission window, in a case that there is to-be-transmitted uplink data.

13. The electronic equipment according to claim 12, wherein the processing circuitry is further configured to:
start a timer after the electronic equipment accesses the best serving satellite equipment; and
transmit, after the timer expires, the uplink data to the network side equipment using the unlicensed resources allocated by the network side equipment.

14. The electronic equipment according to claim 12, wherein the processing circuitry is further configured to:
determine the best serving satellite equipment according to ephemeris information of respective satellite equipment, in a case that there is to-be-transmitted uplink data in a sleep window; and
access the best serving satellite equipment.

15. The electronic equipment according to claim 7, wherein the network side equipment is a non-transparent satellite equipment that serves the electronic equipment, or ground base station equipment connected with transparent satellite equipment that serves the electronic device.

16. A wireless communication method performed by electronic equipment, comprising:
determining parameters of a sleep mode of user equipment according to information related to uplink data of the user equipment, the parameters of the sleep mode including a time length of a sleep window, a time length of a data transmission window, and a start time of a first data transmission window; and
transmitting the parameters of the sleep mode to the user equipment so that the user equipment enters the data transmission window and the sleep window alternately in time domain according to the parameters of the sleep mode.

17. The wireless communication method according to claim 16, wherein the information related to the uplink data includes at least one of: a size of the uplink data, a period of the uplink data, and a maximum delay allowed by the uplink data.

18. The wireless communication method according to claim 16, wherein the determining parameters of a sleep mode of user equipment further comprises:
determining the parameters of the sleep mode according to location information of the user equipment and radio frequency characteristics of the user equipment, the parameters of the sleep mode further including information on best serving satellite equipment corresponding to each data transmission window.

19. The wireless communication method according to claim 16, further comprising:
determining Non-Orthogonal Multiple Access NOMA groups according to information related to uplink data of a plurality of user equipment; and
determining identical parameters of the sleep mode for a plurality of user equipment in a same NOMA group.

20. The wireless communication method according to claim 16, further comprising:
receiving the information related to the uplink data from satellite equipment serving the user equipment.

21. The wireless communication method according to claim 16, further comprising:
transmitting the parameters of the sleep mode of the user equipment to non-transparent satellite equipment that will serve the user equipment, or ground base station equipment connected with transparent satellite equipment that will serve the user equipment.

22. A wireless communication method performed by electronic equipment, comprising:
receiving parameters of a sleep mode of the electronic equipment from network side equipment, the parameters of the sleep mode including a time length of a sleep window, a time length of a data transmission window, and a start time of a first data transmission window; and
entering the data transmission window and the sleep window alternately in time domain according to the parameters of the sleep mode.

23. The wireless communication method according to claim 22, further comprising:
transmitting information related to uplink data of the electronic equipment to the network side equipment, the information related to the uplink data including at least one of: a size of the uplink data, a period of the uplink data, and a maximum delay allowed by the uplink data.

24. The wireless communication method according to claim 22, further comprising:
transmitting, to the network side equipment, location information of the electronic equipment and radio frequency characteristics of the electronic equipment, and
wherein the parameters of the sleep mode further include information on best serving satellite equipment corresponding to each data transmission window.

25. The wireless communication method according to claim 23, further comprising:
transmitting an uplink resource request to the network side equipment;
receiving, from the network side equipment, uplink resources allocated by the network side equipment; and
transmitting the information related to the uplink data using the uplink resources.

26. The wireless communication method according to claim 23, further comprising:
receiving, from the network side equipment, unlicensed resources allocated by the network side equipment; and
transmitting the information related to the uplink data using the unlicensed resources.

27. The wireless communication method according to claim 24, further comprising:
for each data transmission window,
determining whether there is to-be-transmitted uplink data in the data transmission window;
remaining in a sleep state in a case that there is no to-be-transmitted uplink data; and
accessing best serving satellite equipment corresponding to the data transmission window, in a case that there is to-be-transmitted uplink data.

28. The wireless communication method according to claim 27, further comprising:
starting a timer after the electronic equipment accesses the best serving satellite equipment; and
transmitting, after the timer expires, the uplink data to the network side equipment using the unlicensed resources allocated by the network side equipment.

29. The wireless communication method according to claim 27, further comprising:
determining the best serving satellite equipment according to ephemeris information of respective satellite equipment, in a case that there is to-be-transmitted uplink data in a sleep window; and
accessing the best serving satellite equipment.

30. The wireless communication method according to claim 22, wherein the network side equipment is non-transparent satellite equipment that serves the electronic equipment, or ground base station equipment connected with transparent satellite equipment that serves the electronic equipment.

31. A computer-readable storage medium, storing executable computer instructions, wherein
the executable computer instructions, when executed by a computer, causes the computer to perform the wireless communication method according to any one of claims 16 to 30.
